Europäisches Patentamt

European Patent Office

Office européen des brevets

(19)

(11) EP 0 795 944 A2

(12) EUROPÄISCHE PATENTANMELDUNG

(43) Veröffentlichungstag:
17.09.1997 Patentblatt 1997/38

(51) Int. Cl.⁶: H02H 3/40, H02H 7/26

(21) Anmeldenummer: 97104011.8

(22) Anmeldetag: 11.03.1997

(84) Benannte Vertragsstaaten:
AT BE DE ES GB IT NL SE

(30) Priorität: 12.03.1996 DE 19609595

(71) Anmelder: AEG ATLAS Schutz-
und Leittechnik GmbH
60528 Frankfurt (DE)

(72) Erfinder:
• Schmidt, Michael
D-40882 Ratingen (DE)
• Koglin, Hans-Jürgen, Prof.-Dr.
D-66121 Saarbrücken (DE)

(74) Vertreter: Erbacher, Alfons, Dipl.-Ing. et al
EHG Elektroholding GmbH
Patente
Theodor-Stern-Kai 1
60596 Frankfurt am Main (DE)

(54) **Verfahren zur Bestimmung von Betriebsmittelparametern für wenigstens eine Distanzschutzeinrichtung**

(57)   Gegenstand der Erfindung ist ein Verfahren zur Bestimmung von Betriebsmittelparametern für wenigstens eine digitale Distanzschutzeinrichtung.
Es werden an zwei voneinander entfernten Stellen eine Übertragungsleitung während des Betriebs der Leitung die Leitströme und Leitspannungen gemessen, digitalisiert und gespeichert werde. Beim Auftreten wenigstens einer unsymmetrischen Störung oder einer entsprechenden Schalthandlung im Netz an einer Stelle außerhalb der Leitung wird mit den gemessenen Werten der Leitströme und Leitspannungen auf der Grundlage entkoppelter Modalsysteme je für einen passiven reziproken Vierpol eine Kettenmatrix nach folgender Beziehung bestimmt:

$$\begin{bmatrix} \underline{U}_A \\ \underline{I}_A \end{bmatrix} = \underline{A} \cdot \begin{bmatrix} \underline{U}_B \\ \underline{I}_B \end{bmatrix}$$

worin mit $\underline{A}$ die Kettenmatrix und mit $\underline{U}_A$, $I_A$ jeweils die Leiterspannung und -ströme an der einen Meßstelle und mit $\underline{U}_B$, $I_B$ die Leitspannungen und -ströme der anderen Meßstelle bezeichnet sind. Mit der Kettenmatrix $\underline{A}$ werden ein erster Leistungsparameter und ein zweiter Leistungsparameter bestimmt.
Die Leitungsbeläge werden aus dem ersten und zweiten Leitungsparameter bestimmt.

Fig. 1

(NULL- UND MITSYSTEM)

## Beschreibung

Die Erfindung bezieht sich auf ein Verfahren zur Bestimmung von Betriebsmittelparametern für wenigstens eine Distanzschutzeinrichtung, mit der eine Leitung oder ein Leitungsabschnitt überwacht wird.

Distanzschutzeinrichtungen sollen bei Fehlern in einem elektrischen Energieverteilungsnetz selektiv die Abschaltung der von den Fehlern betroffenen Stellen mittels Leistungsschaltern bewirken. Dabei muß gewährleistet werden, daß die fehlerhafte Stelle ohne Verschärfung der Störung, d.h. ohne Ausbreitung der Störung im Netz, abgeschaltet wird.

Die Abschaltung soll einen möglichst ungehinderten Betrieb anderer, nicht vom Fehler betroffener Netzteile sicherstellen. Mit einer Distanzschutzeinrichtung wird der Ort eines Fehlers im Netz durch Widerstands- bzw. Leitwertmessung durchgeführt und nach einer von der gemessenen Fehlerentfernung abhängigen Zeit die Auslösung eines Leistungsschalters veranlaßt. Eine Distanzschutzeinrichtung ist z.B. in der Firmendruckschrift der AEG Aktiengesellschaft : Distanzschutzeinrichtung PD 551, Version - 303 - 401/402/403/405 - 620, Betriebsanleitung, S. 1, 30 und 31 beschrieben.

Die Distanzschutzeinrichtungen vergleichen die im Fehlerfalle ermittelten Fehlerimpedanzen, insbesondere die Fehlerraktanzen oder Fehlerresistanzen mit Referenzgrößen, bei denen es sich jeweils um die Leitungsimpedanz, bzw. Leitungsrektanz und/oder Leitungsresistanz der zu schützenden Leitung bzw. des zu schützenden Leitungsabschnitts handelt. Die Werte für die Leitungsimpedanz und der Leitungsresistanz bzw. Leitungsreaktanz der Leitung oder des Abschnitts sind in der jeweiligen Distanzschutzeinrichtung einzustellen. Es handelt sich hierbei um Betriebsmittelparameter, die für die jeweilige Leitung oder den jeweiligen Leitungsabschnitt ermittelt werden müssen.

Die genaue Einstellung der Übertragungsleitungsparameter ist für die zu schützende Übertragungsleitung daher besonders wichtig.

Die Distanzschutzeinrichtung, die zur selektiven Abschaltung die Entfernung zum Fehlerort berechnet, benötigt genaue Angaben der Leitungsparameter. Nach dem Stand der Technik werden diese Größen aus der Leitungsgeometrie berechnet. Dabei sind insbesondere die Nullsystemgrößen, die zudem noch stark frequenzabhängig sind, mit einer großen Unsicherheit behaftet, da verschiedene Einflußgrößen als unbekannt betrachtet und durch Standardwerte angenähert werden müssen. Die Berechnung der Leitungsparameter nach den Näherungen von Carson und Pollaczec [Elektrische Nachrichtentechnik 3 (1926), S. 339-359; Elektrische Nachrichtentechnik ( 1927) S. 18-30] ist in mehreren Punkten unbefriedigend, bzw. kann in der Praxis nicht konsequent angewendet werden:

- Die Näherung geht von einem unendlich langen Linienleiter aus.

- Zur Berücksichtigung der Stromverdrängung im Erdboden muß bei Berechnung vorausgesetzt werden, daß die Erde homogen und somit die Leitfähigkeit konstant ist. Messungen haben jedoch ergeben, daß sich die Leitfähigkeit in dem Bereich, in dem der Erdstrom fließt (mehrere hundert Meter) um Zehnerpotenzen ändern kann.

- Äußere Einflußgrößen und jahreszeitliche Schwankungen, wie z.B. Durchhang der Leiterseile, Temperatur, Bodenfeuchtigkeit oder Bewuchs, werden nicht berücksichtigt.

- Bei Mehrfachleitungen existieren Kopplungen im Nullsystem, die nur näherungsweise erfaßt werden. Der Meßfehler von Distanzschutzeinrichtungen bei induktiv gekoppelten parallelen Stromkreisen wird von Requa [Die Grenzen der Anwendbarkeit des Distanzschutzprinzips, ETG Fachberichte Selektivschutz (1983, S. 22-28)] mit bis zu 50% und von CIGRE SC 34 -WG 04 (1990)) mit bis zu 70% beziffert.

- In der Regel kann nicht vorausgesetzt werden, daß die Leitung bis zum Fehlerort vollständig verdrillt, d.h. symmetrisch ist. Es wurde bereits vorgeschlagen, bei unsymmetrischen Leitungen die Unsymmetrie zu korrigeren (DE 44 01 888). Die Korrektur basiert darauf, daß die Leitungsparameter bekannt sind. Die Meßfehler durch unsymmetrische Leitungsdaten liegen nach Angaben von Requa im Bereich bis 5%.

- Die bekannten Formeln gelten nur für einen schmalen Frequenzbereich, insbesondere für die 50-Hz-Komponente. Für einen schnellen Schutz, wie z.B. der Wanderwellenschutz, oder auch für einen wirksamen Erdschlußdistanzschutz, ist wegen der Auswertung der mittel- und hochfrequenten Einschwingvorgänge darüber hinaus die Kenntnis der Parameter über ein ausgedehntes Frequenzband erforderlich.

Zur Messung der betriebsfrequenten Impedanzen des Mit- und Nullsystems sowie der Kopplung von Mehrfachleitungen im Nullsystem werden in CIGRE SC 34-WG 1990, Application Guide Protection of Complex Transmission Network Configurations) Meßvorschriften zur Ermittlung der Kopplung- und Nullimpedanzen bei 50 Hz vorgestellt. Diese Meßverfahren, die nur an freigeschalteten Betriebsmitteln durchgeführt werden können, setzen neben dem Beschalten mit einer Niederspannungsquelle am Leitungsanfang auch spezielle Beschaltungen am Leitungsende voraus.

Da die Übertragungsleitungsparameter von verschiedenen Größen abhängen, von denen einige meist nicht bekannt sind, ist es nicht möglich, diese Parameter mit der gewünschten Genauigkeit zu bestimmen. Insbesondere beeinflussen verschiedene Größen die Parameter des Nullsystem der symmetrischen Komponenten. Solche Größen sind die Frequenz, der Erdwiderstand und Sättigungserscheinungen der Wandler und Transformatoren. Die Nullsystemwerte sind für Auslöseentwicklungen bzw. zur Fehlerortbestimmung notwendig. Nullsysteme sind für Auslöseentwicklungen bzw. zur Fehlerortbestimmung notwendig. Darüber hinaus verursachen Strom- und Spannungswandler Abweichungen, so daß die berechneten Referenzwerte fehlerhaft sind. Um die Betriebsmittelparameter von Übertragungsleitungen genau zu bestimmen, ist es notwendig, die Parameter für die einzelnen Abschnitte durch eine besondere Meßanordnung zu bestimmen. Aufgrund der Spannungsfreischaltung von Hochspannungsleitungen ist dies sehr aufwendig.

Hier setzt die Erfindung ein, der das Problem zugrunde liegt, ein Verfahren und eine Anordnung zur genaueren Erfassung von Betriebsmittelparametern für die Einstellung von Distanzschutzeinrichtungen zu entwickeln.

Das Problem wird für das Verfahren erfindungsgemäß dadurch gelöst, daß an zwei voneinander entfernten Stellen einer Leitung während des Betriebs der Leitung die Leiterströme und -spannungen durch Abtasten gemessen, digitalisiert und gespeichert werden, daß mit den beim Auftreten wenigstens eines unsymmetrischen Fehlers oder einer entsprechenden Schalthandlung im Netz an einer Stelle außerhalb der Leitung gemesenen Werten der Leiterströme und Leiterspannungen, die durch eine Störwerterkennungseinrichtung bereit gestellt werden, auf der Grundlage entkoppelter Modalsysteme für je einen passiven, reziproken Vierpol eine komplexe Kettenmatrix nach folgender Berechnung bestimmt wird:

$$\begin{bmatrix} \underline{U}_A \\ \underline{I}_A \end{bmatrix} = \underline{A} \cdot \begin{bmatrix} \underline{U}_B \\ \underline{I}_B \end{bmatrix}$$

worin mit $\underline{A}$ die Kettenmatrix und mit $\underline{U}_A$, $\underline{I}_A$ die Leiterspannungen und -ströme an der einen Meßstelle und mit $\underline{U}_B$, $\underline{I}_B$ die Leiterspannungen und -ströme an der anderen Meßstelle bezeichnet sind, daß mit der Kettenmatrix $\underline{A}$ ein erster Leitungsparameter nach folgender Gleichung:

$\gamma \cdot l = ar \cos h (\underline{A}11)$, worin mit l die Leitungslänge und mit $\gamma$ die komplexe Ausbreitungskonstante bezeichnet sind, und ein zweiter Leitungsparameter Zw nach folgender Gleichung:

$$\underline{Z}_w^2 = \frac{\underline{A}_{12}}{\underline{A}_{21}}$$

worin mit Zw der Wellenwiderstand bezeichnet ist, berechnet werden, und daß die Leitungsbeläge aus dem ersten und zweiten Leitungsparameter nach folgenden Beziehungen

$$(R' + j\omega L') \cdot \ell = \gamma \ell \cdot \underline{Z}_w$$

und

$$(G' + j\omega C') \cdot \ell = \frac{\gamma \ell}{\underline{Z}_w}$$

für die Distanzschutzeinrichtung bestimmt werden, worin mit R' der Widerstandsbelag, mit L' der Induktivitätsbelag, mit G' der Konduktanzbelag, mit C' der Kapazitätsbelag und mit $\omega$ die Kreisfrequenz bezeichnet sind, und/oder daß die Kurzschlußeingangsimpedanz $\underline{Z}_K = \underline{Z}w \tanh (\gamma \cdot l)$ und die Leerlaufeingangsadmittanz

$$\underline{Y}_1 = \frac{1}{\underline{Z}_w} \cdot \tanh(\gamma \ell)$$

bestimmt werden.

Auf die vorstehend beschriebene Weise können alle Parameter des Vierpols berechnet werden, durch den die jeweilige Leitung nachgebildet wird. Die Übertragungsleitung zwischen den beiden Meßstellen A und B ist eindeutig durch die Parameter Länge, Wellenwiderstand und Ausbreitungskonstante oder durch die Kurzschlußeingangsimpedanz und die jeweilige Distanzschutzeinrichtung festgelegt. Mit Hilfe der Erfindung können die Leitungsparameter ohne Stillegung der Leitung erhalten werden. Es sind die im Netz vorhandenen Meßeinrichtungen in Form von digitalen Schutzeinrichtungen oder digitalen Strörwerterfassungseinrichtungen zur Erfassung der Daten ausreichend, so daß zu vermessende Betriebsmittel weder frei geschaltet noch durch spezielle Verschaltungen verändert werden müssen.

- Durch die Erfindung mittels Auswertung zusätzlicher Informationen wird ein neues Konzept eines adaptierenden Distanzschutzrelais bereitgestellt. Nach einer Grundparametrierung des Relais ist eine ständige Überwachung und Anpassung an die aktuellen Betriebsmittelparameter möglich. Änderungen der Netztopologie oder jahreszeitliche und belastungsbedingte Schwankungen können so berückcksichtigt werden. Die Adaption kann automatisch erfolgen oder vom Lastverteiler quitiert werden. Eine solche Nachführung der für den Schutz wichtigen Parameter kann man auch als Feinparametrierung bezeichnen.

Die Stellen, an denen die Leiterströme und Leiterspannungen gemessen werden sind vorzugsweise die Enden der jeweiligen Übertragungsleitung.

Die Meßeinrichtungen an den beiden voneinander entfernten Stellen sind vorzugsweise synchronisiert. In diesem Fall reichen die von einem Fehler hervorgerufenen u nd an den beiden Stellen erfaßten Störwerte aus, um die Betriebsmittelparameter zu bestimmen. Sind die Meßeinrichtungen an den beiden Stellen nicht miteinander synchronisiert, dann sind die Meßwerte, die auf zwei Fehlern beruhen, für die Bestimmung der Betriebsmittelparameter heranzuziehen.

Da bei jeder Messung einer physikalischen Größe Fehler auftreten können, die verschiedene Ursachen haben können, werden bei einer bevorzugten Ausführungsform die Resistanz, Reaktanz und Kapazität der jeweiligen Übertragungsleitung aus den von mehr als zwei Netzfehlem und/oder Schalthandlungen erhaltenen Werten die abgeleiteten Übertragungsparameter nach folgender Gleichung bestimmt:

$$\underline{y} = \underline{h}(x) + \underline{v},$$

worin $\underline{y}$ der Vektor der abgeleiteten Übertragungsparameter, $\underline{h}(x)$ der Vektor der Übertragungsparameter und $v$ der Vektor der normalverteilten, unbekannten Meßfehler ist, und daß zur Estimation der Leitungsparameter ein System von überbestimmten Gleichungen nach der Beziehung: $\underline{G}\,\underline{H} \cdot \underline{X} = G \cdot y$ mit der Gewichtsmatrix $\underline{G} = \mathrm{diag}(1/\delta \dots 1/\delta M)$ gelöst wird, worin mit $\underline{H}$ die Jacob-Matrix

$$H_{k.i}(x) = \frac{\partial h_k(x)}{\partial x_i}$$

mit G die Gewichtsmatrix und mit 1... M die Reziprokwerte der Standardabweichungen der M abgeleiteten Leitungsparameter, die nach der Gaußschen Methode der kleinsten Fehlerquadrate bestimmt sind, bezeichnet sind. Durch wiederholte Messungen ist eine sehr gute Näherung an die gesuchten Leitungsparameter möglich, d.h. die Meßfehler sind umso kleiner, je mehr Werte verarbeitet werden.

Bei einer besonders vorteilhaften Ausführungsform wird die Abtastung der Leitströme und Leiterspannungen an den beiden Meßstellen synchronisiert, wobei aus den bei wenigstens einem unsymmetrischen Fehler oder einer unsymmetrischen Schalthandlung erhaltenen digitalen Werte die Kurzschlußeingangsimpedanz nach folgender Beziehung:

$$\underline{Z}_k = \frac{\underline{A}_{12}}{\underline{A}_{11}} = \frac{\underline{U}_A{}^2 - \underline{U}_B{}^2}{\underline{U}_A \cdot I_A + \underline{U}_B \cdot I_B}$$

und die Leerlaufeingangsadmittanz

$$\underline{Y}_I = \frac{\underline{A}_{21}}{\underline{A}_{11}} = \frac{I_A{}^2 - I_B{}^2}{\underline{U}_A \cdot I_A + \underline{U}_B \cdot I_B}$$

bestimmt, worin mit $\underline{U}_A$ und $\underline{U}_B$ jeweils die Vektoren der Meßwerte der Spannungen und mit $I_A$, $I_B$ jeweils die Vektoren der Ströme an den beiden Meßstellen bezeichnet sind.

Bei einer anderen zweckmäßigen Ausführungsform, werden den Meßwerten aus den zeitlichen Verläufen der Ströme und Spannungen an den beiden Meßstellen jeweils lokale Impedanzen nach den Gleichungen

$$\underline{Z}_A = \frac{\underline{U}_A}{I_A} \text{ und } \underline{Z}_B = \frac{\underline{U}_B}{I_B}$$

berechnet und danach die Kurzschlußeingangsimpedanz nach der Gleichung

$$\underline{Z}_k = \underline{Z}_A - \underline{Z}_B + \underline{Z}_A \cdot \underline{Z}_B \cdot \underline{Y}_l$$

bestimmt worin mit $\underline{Z}_A$, $\underline{Z}_B$ jeweils die lokalen Impedanzen und mit $\underline{Y}l$ die Leerlaufeingangsadmittanz bezeichnet sind, und wobei letztere als Standard wert vorgegeben wird.

Wenn die digitalen Meßwerte von mehr als einem Netzfehler oder Ereignis vorhanden sind, werden bei einer weiteren vorteilhaften Ausführungsform die Kurzschlußeingangs-impedanzen und die Leerlaufeingangsadmittanz zugleich nach folgender Gleichung bestimmt:

$$
\begin{bmatrix}
1 & -\underline{Z}_A^{(1)} \cdot \underline{Z}_B^{(1)} \\
1 & -\underline{Z}_A^{(2)} \cdot \underline{Z}_B^{(2)} \\
\vdots & \vdots \\
1 & -\underline{Z}_A^{(M)} \cdot \underline{Z}_B^{(M)}
\end{bmatrix}
\cdot
\begin{bmatrix}
\underline{Z}_k \\
\underline{Y}_l
\end{bmatrix}
=
\begin{bmatrix}
\underline{Z}_A^{(1)} - \underline{Z}_B^{(1)} \\
\underline{Z}_A^{(2)} - \underline{Z}_B^{(2)} \\
\vdots \\
\underline{Z}_A^{(M)} - \underline{Z}_B^{(M)}
\end{bmatrix}
$$

worin mit $\underline{Z}_A$ und $\underline{Z}_B$ jeweils die Kurzschlußeingangsimpedanzen an den beiden Meßstellen A und B und mit 1 ...M die Ereignisse bezeichnet sind. Die Auflösung dieses komplexen, linearen Gleichungssystems ergibt $\underline{Z}_K$ und $\underline{Y}l$.

Eine weitere Ausführungsform zur Bestimmung der Leitungsparameter besteht darin, daß aus den Meßwerten mehrere Ereignisse die Elemente der Admittanz-Matrix nach der Beziehung

$$\underline{Y}_{11} = \frac{\underline{A}_{11}}{\underline{A}_{12}} ; \qquad \underline{Y}_{12} = \frac{1}{\underline{A}_{12}}$$

bestimmt werden, daß mittels der Admittanz-Matrixen die komplexen Ströme wie folgt bezeichnet werden:

$$I_{AW} + jI_{Ab} = \underline{Y}_{11} \cdot U_A \cdot ej^{\Delta\gamma} - \underline{Y}_{12} \cdot U_B \cdot ej^{\Delta\gamma}$$

$$I_{BW} + jI_{Bb} = \underline{Y}_{12} \cdot U_A \cdot ej^{\Delta\gamma} - \underline{Y}_{12} \cdot U_B,$$

woraus die Real- und Imaginärteile gebildet und die lokalen Admittanzen wie folgt berechnet werden

$$G_A = \frac{I_{Aw}}{U_A}$$

$$B_A = \frac{I_{Ab}}{U_A}$$

$$G_B = \frac{I_{Bw}}{U_B}$$

$$B_B = \frac{I_{Bb}}{U_B}$$

und daß hieraus die Leitungsparameter nach der Beziehung $\underline{G} \cdot \underline{H} \cdot \underline{x} = \underline{G} \cdot \underline{y}$ mit

$$x = \begin{bmatrix} U_A^{(1)} \\ U_B^{(1)} \\ \Delta\varphi^{(1)} \\ \vdots \\ U_A^{(M)} \\ U_B^{(M)} \\ \Delta\varphi^{(M)} \\ G_{11} \\ B_{11} \\ G_{12} \\ B_{12} \end{bmatrix} \quad ; \quad y = \begin{bmatrix} U_A^{(1)} \\ U_B^{(1)} \\ I_{Aw}^{(1)} \\ I_{Ab}^{(1)} \\ I_{Bw}^{(1)} \\ I_{Bb}^{(1)} \\ G_A^{(1)} \\ B_A^{(1)} \\ G_B^{(1)} \\ B_B^{(1)} \\ \vdots \\ U_A^{(M)} \\ U_B^{(M)} \\ I_{Aw}^{(M)} \\ I_{Ab}^{(M)} \\ I_{Bw}^{(M)} \\ I_{Bb}^{(M)} \\ G_A^{(M)} \\ B_A^{(M)} \\ G_B^{(M)} \\ B_B^{(M)} \end{bmatrix}$$

bestimmt werden, worin mit $\underline{Y}_{11}$, $\underline{Y}_{12}$ die Elemente der Admittanz-Matrix mit $I_{AW}$, $I_{Ab}$ die Wirk- und Blindströme der einen Meßstelle und mit $I_{BW}$, $I_{Bb}$ die Wirk- und Blindströme der anderen Meßstelle und mit M das jeweilige Ereignis bezeichnet ist. Mit zwei aber besser mit drei oder mehr Ereignissen werden die Leitungsparameter nach dem Verfahren der kleinsten Fehlerquadrate bestimmt.

Die Erfindung wird im folgenden an Hand eines in einer Zeichnung dargestellten Ausführungsbeispiels näher beschrieben, aus dem sich weitere Einzelheiten, Merkmale und Vorteile ergeben.

Fig. 1 ein Blockschaltbild einer Anordnung zur Bestimmung von Betriebsmittelparametern zum Einstellen der Referenzwerte einer Distanzschutzeinrichtung,

Fig. 2 ein Übersichtsschaltbild einer Drehstromleitung, deren Betriebsmittelparameter bestimmt werden sollen,

Fig. 3 ein Blockschaltbild einer Drehstromleitung nach Entkopplung durch Modaltransformation,

Fig. 4 ein Schaltbild einer Leitungsnachbildung,

Fig. 5 ein Ablaufdiagramm eines Verfahrens zur linearen Estimation von Betriebsmittelparametern,

Fig. 6 ein Ablaufdiagramm eines Verfahrens zur nichtlinearen Estimation von Betriebsmittelparametern

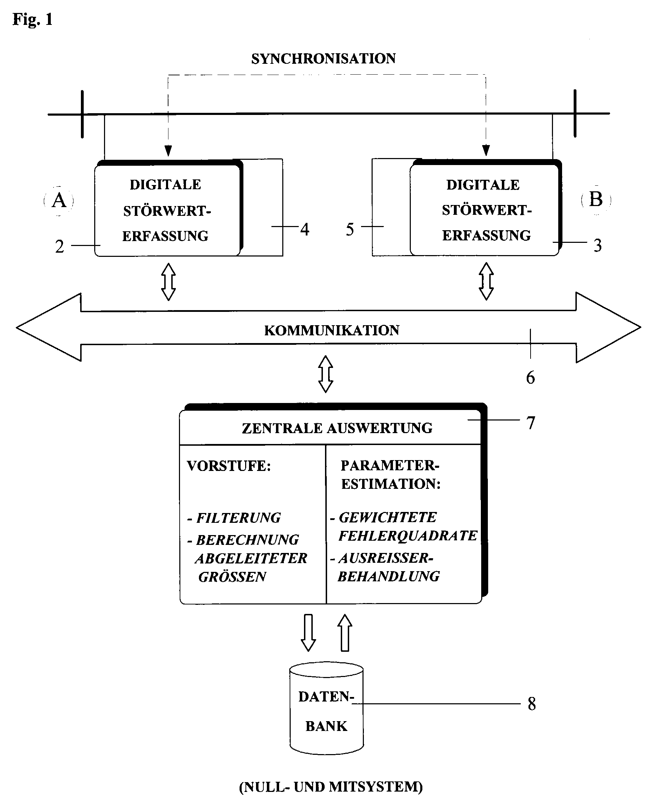

Eine Hochspannungs-Übertragungsleitung 1 ist an bzw. nahe ihren beiden Enden jeweils mit einer digitalen Meßeinrichtung 2, 3 für die Leiterströme und Leiterspannungen verbunden. Die beiden Meßstellen sind in Fig.1 auch mit A und B bezeichnet. Die Meßeinrichtungen 2, 3 haben weiterhin Detektoren zur Erkennung von Störungen bzw. Fehlern auf der Übertragungsleitung, d.h. mit den Meßeinrichtungen 2, 3 ist eine Störwerterfassung möglich. Die Meßeinrichtungen 2, 3 sind insbesondere Bestandteile von Distanzschutzeinrichtungen 4, 5.

Die Meßeinrichtungen 2, 3 sind über eine Kommunikationsschnittstelle 6 mit einer zentralen Auswerteinrichtung 7 verbunden, die eine Datenbank 8 aufweist.

Als Meßeinrichtungen werden die bereits im Netz vorhandenen digitalen Distanzschutzeinrichtungen oder digitalen Störwerterfassungseinrichtungen verwendet. Die Störwerte werden quasi gleichzeitig an beiden Stellen A, B erfaßt und aufgezeichnet.

Als zentrale Auswerteeinheit kann ein PC (ab 386-CPU) eingesetzt werden. Die Übertragung der Strörwerte von den Meßeinrichtungen 2, 3 zur Auswerteeinrichtung 7 ist dank der vielfältigen Kommunikationsmöglichkeiten digitaler Schutzeinrichtungen möglich. Die Übertragung kann sowohl durch eine Direktverbindung als auch über eine Modemstrecke durchgeführt werden, wobei dann zusätzlich je ein Modern und ein Telefonanschluß für die Meßsysteme sowie für den PC erforderlich sind. Durch Hinzunahme einer Wahlwiederholungseinrichtung ist auch ein Automatikbetrieb möglich: Nach Aufzeichnung eines Ereignisses wird die zentrale Auswerteeinheit selbständig angewählt und die Datenübertragung durchgeführt.

Um möglichst viele Ereignisse zur Estimation der Leitungsparameter der Übertragungsleitung 1 nutzen zu können, werden Störfälle und/oder Schaltvorgänge außerhalb des betrachteten Leitungsabschnitts verwendet. Man muß nicht abwarten, bis beispielsweise auf dem betrachteten Leitungsabschnitt zwischen den Meßeinrichtungen 2, 3 selbst ein Kurzschluß auftritt, es genügt ein Teilkurzschlußstrom, der von einem Fehler hervorgerufen wird, der vom Meßort auch weiter entfernt sein kann.

Zur Auswertung können prinzipiell alle unsymmetrischen Ereignisse verwendet werden, die Nullstrom und Nullspannung ausreichender Amplitude hervorrufen, wie z.B. unsymmetrische Teilkurzschlußströme oder absichtlich herbeigeführte einpolige Kurzunterbrechungen während des normalen Netzbetriebs.

Da die Unsymmetrie außerhalb der betrachteten Leitung liegt, wird durch eine Modaltransformation eine Entkopplung der Drehstromleitung erreicht. Die Kopplung der Modalsysteme liegt außerhalb der Leitung im Restnetz und muß nicht für jeden Fehlerfall getrennt modelliert werden. Das Problem der Betriebsparameterbestimmung reduziert sich somit auf ein einphasiges Problem, und die Parameter der drei (bei nichtrotierenden Betriebsmitteln zwei) Modalsysteme, im weiteren als Null-, Mit- und Gegensystem bezeichnet, können getrennt bestimmt werden.

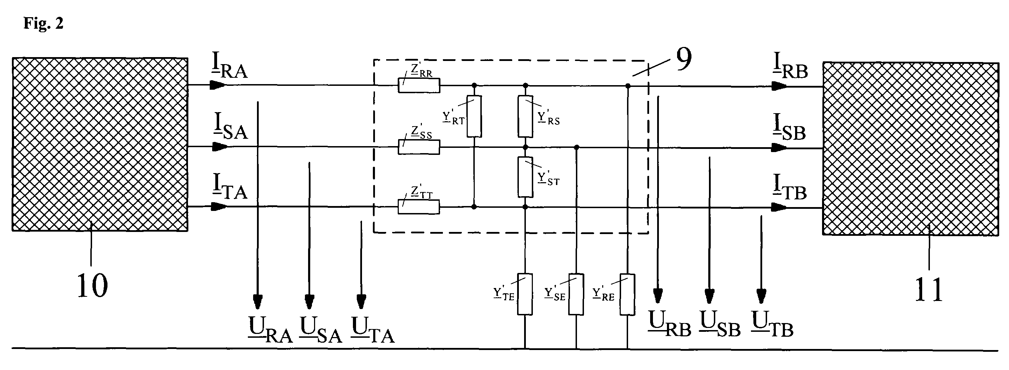

Die Fig. 2 zeigt eine homogene Drehstromleitung 9 zwischen zwei Netzabschnitten 10, 11. Die Leitströme, die in die Drehstromleitung 9 in den drei Phasen fließen und an der Meßstelle A gemessen werden und mit $\underline{I}_{RA}$, $\underline{I}_{SA}$ und $\underline{I}_{TA}$ bezeichnet. Die an der Meßstelle A erfaßten Phasenspannungen sind mit $\underline{U}_{RA}$, $\underline{U}_{SA}$ und $\underline{U}_{TA}$ bezeichnet. An der Meßstelle B werden die mit $\underline{I}_{RB}$, $\underline{I}_{SB}$ und $\underline{I}_{TB}$ bezeichneten Ströme und die mit $\underline{U}_{RB}$, $\underline{U}_{SB}$ und $\underline{U}_{TB}$ bezeichneten Spannungen gemessen. Die Messungen erfolgen durch Abtastung, z.B. im Kilohertzbereich mit ausschließender Digitalisierung. Die digitalisierten Meßwerte werden für eine gewisse Zeit gespeichert. Störungen bzw. Fehler wie Kurzschlüsse und Schaltmaßnahmen werden detektiert.

Die Drehstromleitung setzt sich aus unendlich vielen hintereinander geschalteten Leitungsabschnitten der Länge dl zusammen, die jeweils Längs- und Querimpedanzelemente $\underline{Z}'_{RR}$, $\underline{Z}'_{SS}$, $\underline{Z}'_{TT}$, $\underline{Y}'_{RE}$, $\underline{Y}'_{SE}$, $\underline{Y}'_{TE}$, $\underline{Y}'_{RS}$, $\underline{Y}'_{ST}$ und $\underline{Y}'_{RT}$ aufweisen, mit denen die Eigen- und Koppelgrößen bezeichnet sind.

Wegen der Frequenzabhängigkeit der Leitungsparameter ist anstelle einer Beschreibung im Zeitbereich die Beschreibung durch Vektordifferentialgleichungen mit komplexen Zeigern für den eingeschwungenen Zustand bei einer Frequenz geeigneter. Mit den Bezeichnungen nach Fig. 2 gilt für dl$\rightarrow$ 0:

$$\begin{bmatrix} d\underline{U}_R \\ d\underline{U}_S \\ d\underline{U}_T \end{bmatrix} = -d\ell \cdot \begin{bmatrix} \underline{Z}'_{RR} & \underline{Z}'_{RS} & \underline{Z}'_{RT} \\ \underline{Z}'_{RS} & \underline{Z}'_{SS} & \underline{Z}'_{ST} \\ \underline{Z}'_{RT} & \underline{Z}'_{ST} & \underline{Z}'_{TT} \end{bmatrix} \cdot \begin{bmatrix} \underline{I}_R \\ \underline{I}_S \\ \underline{I}_T \end{bmatrix}$$

$$\begin{bmatrix} d\underline{I}_R \\ d\underline{I}_S \\ d\underline{I}_T \end{bmatrix} = -d\ell \cdot \begin{bmatrix} \underline{Y}'_{RE} + \underline{Y}'_{RS} + \underline{Y}'_{RT} & -\underline{Y}'_{RS} & -\underline{Y}'_{RT} \\ -\underline{Y}'_{RS} & \underline{Y}'_{SE} + \underline{Y}'_{RS} + \underline{Y}'_{ST} & -\underline{Y}'_{ST} \\ -\underline{Y}'_{RT} & -\underline{Y}'_{ST} & \underline{Y}'_{TE} + \underline{Y}'_{RT} + \underline{Y}'_{ST} \end{bmatrix} \cdot \begin{bmatrix} \underline{U}_R \\ \underline{U}_S \\ \underline{U}_T \end{bmatrix}$$

oder kurz in Vektorschreibweise

$$dU_{RST} = -d\ell \cdot Z'_{RST} \cdot I_{RST} \qquad (1b)$$

$$dI_{RST} = -d\ell \cdot Y'_{RST} \cdot U_{RST}$$

mit der Längenimpedanzbelags-Matrix $Z'_{RST}$ und der Queradmittranzbelags-Matrix $Y'_{RST}$. Falls ein oder mehrere Erdseile vorhanden sind, kann das Mehrphasensystem durch Elimination des Erdseilstroms wieder in das obige Dreiphasensystem überführt werden.

Aus den Gleichungen (5.1) erhält man je eine Differentialgleichung 2. Ordnung für Spannung und Strom:

$$\frac{d^2 U_{RST}}{d\ell^2} = Z'_{RST} \cdot Y'_{RST} \cdot U_{RST} = \Gamma_U^2 \cdot U_{RST} \qquad (2)$$

$$\frac{d^2 I_{RST}}{d\ell^2} = Y'_{RST} \cdot Z'_{RST} \cdot I_{RST} = \Gamma_I^2 \cdot I_{RST}$$

mit den Definitionen

$$\Gamma_U = (Z'_{RST} \cdot Y'_{RST})^{\frac{1}{2}} \qquad \text{(Spannungs-Fortpflanzungskonstanten-Matrix)}$$

$$\Gamma_I = (Y'_{RST} \cdot Z'_{RST})^{\frac{1}{2}} \qquad \text{(Strom-Fortpflanzungskonstanten-Matrix)}$$

die wegen $Z'_{RST} Y'_{RST} Y'_{RST} Z'_{RST}$ im allgemeinen verschieden sind. Für symmetrische Matrizen $Z'_{RST}$ und $Y'_{RST}$ gilt jedoch

$$\Gamma_I = \Gamma_U^T$$

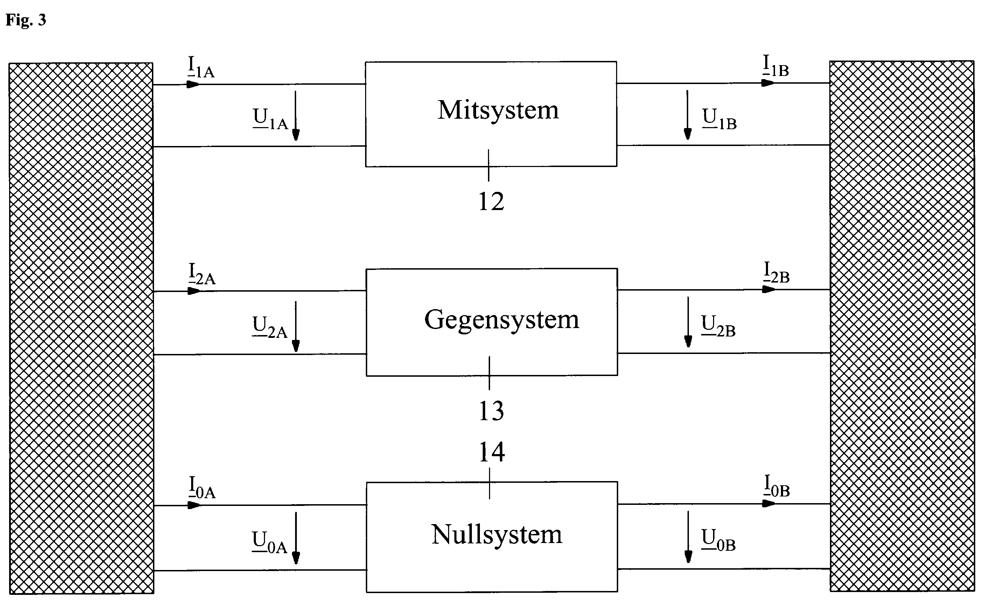

Da die Störungen oder Schalthandlungen außerhalb der Leitung 1 liegen, werden die Gleichungen (2) durch eine lineare Transformation in drei unabhängige Modalsysteme entkoppelt. In Fig. 3 ist ein Mitsystem 12 mit den Strömen $I_{1A}$, $I_{1B}$ und den Spannungen $U_{1A}$, $U_{1B}$, ein Gegensystem mit den Strömen $I_{2A}$, $I_{2B}$ und den Spannungen $U_{2A}$, $U_{2b}$ und ein Nullsystem mit dem Strom $I_{0A}$, $I_{0B}$ und den Spannungen $U_{0A}$ und $U_{0B}$ dargestellt.

Mit den modalen Spannungen und Strömen kann Gleichung (2) überführt werden:

$$\frac{d^2 U_{mod}}{d\ell^2} = T_U \cdot \Gamma_U^2 \cdot T_U^{-1} \cdot U_{mod} = \Gamma_{U,mod}^2 \cdot U_{mod} \qquad (4)$$

$$\frac{d^2 I_{mod}}{d\ell^2} = T_I \cdot \Gamma_I^2 \cdot T_I^{-1} \cdot I_{mod} = \Gamma_{I,mod}^2 \cdot I_{mod}$$

Entkopplung wird erreicht, wenn die Matrizen $\Gamma_U^2$ und $\Gamma_I^2$ durch die im allgemeinen verschiedenen Transformationsmatrizen $T_U$ und $T_I$ auf Diagonalform transformiert werden. Die Diagonalmatrizen $\Gamma_{Umod}^2$ $\Gamma_{Imod}^2$ enthalten dann die Eigenwerte von $\Gamma_U^2$ bzw. $\Gamma_I^2$ und die Transformationsmatrizen $T_U$ und $T_I$ die zugehörigen Eigenvektoren. Da $\Gamma_U^2$ und $\Gamma_I^2$ gleiche Eigenwerte besitzen folgt.

$$\Gamma_{U,mod}^2 = \Gamma_{I,mod}^2 = \Gamma_{,mod}^2 \qquad (5)$$

Mit Hilfe der Transformationsmatrizen $T_U$ und $T_I$ können auch die modale Längsimpedanzbelags-Matrix und die modale Queradmittanzbelags-Matrix bestimmt werden [ZHA-90]:

$$\underline{Z}'_{mod} = \underline{T}_U \cdot \underline{Z}'_{RST} \cdot T_I^{-1} \tag{6}$$

$$\underline{Y}'_{mod} = \underline{T}_I \cdot \underline{Y}'_{RST} \cdot T_U^{-1}$$

Übertragungsleitungen werden üblicherweise als ideal verdrillt betrachtet und die geringfügige Unsymmetrie wird vernachlässigt. Die Matrizen $\underline{Z}'_{RST}$ und $\underline{Y}'_{RST}$ weisen dann eine diagonal-zyklische Symmetrie auf und besitzen nur noch jeweils zwei verschiedene Elemente.

$$\underline{Z}'_{RST} = \begin{bmatrix} \underline{Z}'_s & \underline{Z}'_m & \underline{Z}'_m \\ \underline{Z}'_m & \underline{Z}'_s & \underline{Z}'_m \\ \underline{Z}'_m & \underline{Z}'_m & \underline{Z}'_s \end{bmatrix} \tag{7}$$

$$\underline{Y}'_{RST} = \begin{bmatrix} \underline{Y}'_s + 2\cdot\underline{Y}'_m & -\underline{Y}'_m & -\underline{Y}'_m \\ -\underline{Y}'_m & \underline{Y}'_s - 2\cdot\underline{Y}'_m & -\underline{Y}'_m \\ -\underline{Y}'_m & -\underline{Y}'_m & \underline{Y}'_s + 2\cdot\underline{Y}'_m \end{bmatrix}$$

Der Index "s" (self) bezeichnet die Eigengrößen einer Phase, der Index "m" (mutual) die Koppelgrößen zwischen jeweils zwei Phasen. Die Transformationsmatrizen $\underline{T} = \underline{T}_{II} = \underline{T}_I$ sind in diesem Fall identisch und außerdem unabhängig vor $\underline{Z}'_{RST}$ und $\underline{Y}'_{RST}$ damit unabhängig von den Elementen der Leitung. Weiterhin ist $\underline{T}$ eine unitäre Matrix, d.h. $\underline{T}^{-1} = (\underline{T}^T)^*$.

Zu den immer eindeutigen Eigenwerten einer Matrix können verschiedene Eigenvektoren gebildet werden. Daher existieren zahlreiche Modaltransfomationen, die größtenteils in der DIN 13321 aufgeführt sind. Besonders häufig werden die symmetrischen Komponenten verwendet mit den bezugskomponenteninvarianten Transformationsmatrizen

$$\underline{T} = \frac{1}{3}\cdot\begin{bmatrix} 1 & 1 & 1 \\ 1 & \underline{a} & \underline{a}^2 \\ 1 & \underline{a}^2 & \underline{a} \end{bmatrix}; \quad \underline{T}^{-1} = \begin{bmatrix} 1 & 1 & 1 \\ 1 & \underline{a}^2 & \underline{a} \\ 1 & \underline{a} & \underline{a}^2 \end{bmatrix} \quad \text{mit } \underline{a} = \exp(j\cdot\frac{2\pi}{3}) \tag{8}$$

sowie die Othogonalkomponenten, in der englischsprachigen Literatur häufig als Clarke-Komponenten bezeichnet, die den Vorteil reeler Transformationsmatrizen besitzen:

$$T = \frac{1}{3}\begin{bmatrix} 1 & 1 & 1 \\ \sqrt{2} & \frac{-1}{\sqrt{2}} & \frac{-1}{\sqrt{2}} \\ 0 & \frac{\sqrt{3}}{\sqrt{2}} & \frac{-\sqrt{3}}{\sqrt{2}} \end{bmatrix}; \quad T^{-1} = \begin{bmatrix} 1 & \sqrt{2} & 0 \\ 1 & \frac{-1}{\sqrt{2}} & \frac{\sqrt{3}}{\sqrt{2}} \\ 1 & \frac{-1}{\sqrt{2}} & \frac{-\sqrt{3}}{\sqrt{2}} \end{bmatrix} \tag{9}$$

Daneben werden vereinzelt weitere reele Transformationen verwendet, wie z.B. die Karrenbauer-Transformation oder die Wedepohl-Transformation. Unabhängig von der gewählten Transformation sind die Impedanzen in den korrespondierenden Modalsystemen identisch und werden in Anlehnung an die symmetrischen Komponenten als Null-, Mit. und Gegenimpedanzen (bzw. Admittanzen) bezeichnet. Die modale Längsimpedanzbelags-Matrix und die modale Queradmittanzbelags-Matrix (Gleichung(6)) lauten dann:

$$\underline{Z}'_{mod} = \begin{bmatrix} \underline{Z}'_0 & 0 & 0 \\ 0 & \underline{Z}'_l & 0 \\ 0 & 0 & \underline{Z}'_2 \end{bmatrix} \qquad \underline{Y}'_{mod} = \begin{bmatrix} \underline{Y}'_0 & 0 & 0 \\ 0 & \underline{Y}'_l & 0 \\ 0 & 0 & \underline{Y}'_2 \end{bmatrix} \qquad (10)$$

mit den Modalgrößen

$$\text{Nullimpedanzbelag } \underline{Z}'_0 = \underline{Z}'_s + \underline{Z}'_m \qquad (11)$$

$$\text{Mitimpedanzbelag } \underline{Z}'_1 = \underline{Z}'_s + \underline{Z}'_m$$

$$\text{Gegenimpedanzbelag } \underline{Z}'_2 = \underline{Z}'_s + \underline{Z}'_m$$

$$\text{Nulladmittanzbelag } \underline{Y}'_0 = \underline{Y}'_s$$

$$\text{Mitadmittanzbelag } \underline{Y}'_1 = \underline{Y}'_s + 3 \cdot \underline{Y}'_m$$

$$\text{Gegenadmittanzbelag } \underline{Y}'_2 = \underline{Y}'_s + 3 \cdot \underline{Y}'_m$$

Die beiden Meßorte A und B können als Ein- und Ausgang eines Vierpols betrachtet werden, der mit der Impedanz $\underline{Z}_B$, die das Restnetz verkörpert, abgeschlossen ist (Bild 2.3).

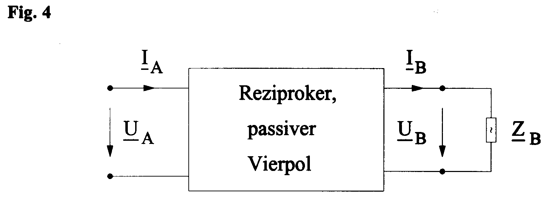

Eine homogene Leitung stellt einen passiven, reziproken Vierpol dar, der durch die Impedanz $\underline{Z}_B$, die das Restnetz verkörpert, abgeschlossen ist (Fig.4). Die Indizes "A" und "B" kennzeichnen die beiden Meßorte an Anfang und Ende der Leitung, an denen die Störwerte aufgezeichnet werden.

Die Eingangsgrößen sind mit $\underline{I}_A$, $\underline{U}_A$ Ausgangsgrößen (Ströme, Spannungen) des Vierpols sind in Fig. 4 mit $\underline{I}_B$, $\underline{U}_B$ bezeichnet. Abgeschlossen ist der Vierpol mit der Impedanz $\underline{Z}_B$. Zur mathematischen Beschreibung existieren zahlreiche, ineinander überführbare Vierpolgleichungen, von denen die folgende Kettenform verwendet wird:

$$\begin{bmatrix} \underline{U}_A \\ \underline{I}_A \end{bmatrix} = \underline{A} \cdot \begin{bmatrix} \underline{U}_B \\ \underline{I}_B \end{bmatrix} \qquad (12)$$

Die komplexe Kettenmatrix $\underline{A}$ hat die Form:

$$\underline{A} = \begin{bmatrix} \cosh(\underline{\gamma}\ell) & \underline{Z}_w \cdot \sinh(\underline{\gamma}\ell) \\ \dfrac{1}{\underline{Z}_w} \cdot \sinh(\underline{\gamma}\ell) & \cosh(\underline{\gamma}\ell) \end{bmatrix} \qquad (13)$$

Dabei wird die Leitung eindeutig beschrieben durch ihre Parameter

$$\text{Leitungslänge: } \ell \qquad (14)$$

$$\text{Wellenwiderstand: } \underline{Z}_w = \frac{\sqrt{R'+j\omega L'}}{\sqrt{G'+j\omega C'}}$$

$$\text{komplexe Ausbreitungskonstante: } \underline{\gamma} = \sqrt{(R' + j\omega L') \cdot (G' + j\omega C')}$$

sowie die Leitungsbeläge

$$\text{Widerstandsbelag } R' \tag{15}$$

$$\text{Induktivitätsbelag } L'$$

$$\text{Konduktanzbelag } G'$$

$$\text{Kapazitätsbelag } C'$$

Bei bekannter Kettenmatrix A können diese Leistungsparameter direkt bestimmt werden:

$$\underline{\gamma}\ell = \text{ar cosh}(\underline{A}_{11}) \tag{16}$$

$$\underline{Z}_w^2 = \frac{\underline{A}_{12}}{\underline{A}_{21}}$$

Durch komplexe Division erhält man schließlich die Leitungsbeläge:

$$(R' + j\omega L') \cdot \ell = \underline{\gamma}\ell \cdot \underline{Z}_w \tag{17}$$

$$(G' + j\omega C') \cdot \ell = \frac{\underline{\gamma}\ell}{\underline{Z}_w}$$

Alternativ können die Größen Kurzschlußeingangsimpedanz

$$\underline{Z}_k = \lim_{\underline{Z}_B \to 0} \underline{Z}_A = \underline{Z}_w \cdot \tanh(\underline{\gamma}\ell) \tag{18a}$$

und Leerlaufeingangsadmittanz

$$\underline{Y}_l = \lim_{\underline{Z}_B \to \infty} \underline{Z}_A = \frac{1}{\underline{Z}_w} \cdot \tanh(\underline{\gamma}\ell) \tag{18b}$$

verwendet werden, welche allgemein die Eingangsimpedanz des Vierpols bei kurzgeschlossenem bzw. leerlaufendem Ausgang bezeichnen und ebenfalls einen Vierpol vollständig und eindeutig beschreiben.

Diese Parameter werden von allen Verfahren für jedes Modalsystem getrennt ermittelt. Das bedeutet, daß nicht nur die Längsreaktanz $X_k$ bestimmbar ist, die für den Distanzschutz von besonderer Bedeutung ist. In fast allen Fällen ist es möglich, die vollständigen Leitungskenngrößen, also auch den Wirkwiderstand und die Kapazitäten, mit hoher Genauigkeit sowohl im Mit- als auch im Nullsystem zu bestimmen.

Der Lastzustand einer Leitung legt fest, ob ihre Längs- oder Querelemente günstiger bestimmt werden können. Zur Quantifizierung wird ein Belastungsfaktor $\underline{m}_L$ definiert, der ein Maß für die Anpassung der Last $\underline{Z}_B$ an den Wellenwiderstand $\underline{Z}_W$ der Leitung darstellt:

$$\tag{19}$$

Für $\underline{m}_L = 1$ ist die Leitung mit ihrem Wellenwiderstand abgeschlossen. Sie wird mit ihrer natürlichen Leistung $P = P_{nat}$ betrieben.

Für $m_L > 1$ wird die Leitung im Starklastbereich betrieben ($P > P_{nat}$). Der Fall $m_L \infty$ kennzeichnet einen Kurzschluß unmittelbar am Leitungsende, also

$$\underline{Z}_B = 0 \tag{20}$$

$$\underline{Z}_A = \underline{Z}_k$$

Schließlich bedeutet $m_L < 1$, daß die Leitung im Schwachlastbereich betrieben wird ($P < P_{nat}$) Der Fall $m_1 \to 0$ kennzeichnet eine leerlaufende Leitung, also

$$ZB \to \infty \tag{21}$$

$$ZA = 1/\underline{Y}I$$

Zur Bestimmung der Längselemente ist mL > 1 günstig. In diesem Fall hat die Impedanz ZA induktiven Charakter, da der große Laststrom ein Magnetfeld verursacht, das über das elektrische Feld dominiert. Zur Bestimmung der Querelemente ist mL < 1 günstig. Die Impedanz ZA hat dann kapazitiven Charakter, da nun das elektrische Feld den größeren Einfluß hat.

Wenn die Spannungen und Ströme an den beiden Meßorten A und B synchron abgetastet und aufgezeichnet werden, können die Leitungsparameter bereits aus einer Stötwertaufzeichnung bestimmt werden, d.h. aus den Phasoren der Spannungen und Ströme an den Meßorten "A" und "B" eine Bestimmung der Leitungskenngrößen aus einem unsymmetrischen Ereignis möglich. Voraussetzung ist, daß Spannungen und Ströme an beiden Meßorten gleichzeitig aufgezeichnet werden. Die Voraussetzung der Gleichzeitigkeit der Messungen ist bei den zur Zeit verwendeten Einrichtungen nicht ohne weiteres erfüllt, da digitale Schutzeinrichtungen, die zur Meßwerterfassung eingesetzt werden, als dezentrale, voneinander unabhängige Einheiten arbeiten. Die an beiden Meßorten aufgezeichneten Störwerte besitzen daher zueinander eine zeitliche Verschiebung $\tau$, die verschiedene Ursachen haben kann.

Jede Schutzeinrichtung erkennt selbständig eine Anregung und startet daraufhin die Aufzeichnung der Störwerte. Die an beiden Meßorten aufgezeichneten Störwerte besitzen daher unterschiedliche Startzeitpunkte, deren Differenz je nach Gerätetoleranzen und Einstellungen der Anregesysteme im Bereich von mehreren Netzperioden liegen kann. Bei vorhandener Abtastsynchronisierung kann diese Zeitdifferenz korrigiert werden, z.B. durch Echtzeitstempelung der Anregezeitpunkte. Bei fehlender oder ungenauer Abtastsynchronisierung werden an den beiden Meßorten auch die Abtastwerte selbst zu unterschiedlichen Abtastzeitpunkten aus den Signalen entnommen. Diese Verschiebung beträgt im ungünstigsten Fall ein halbes Abtastintervall. Die Möglichkeit, daß beide Schutzeinrichtungen mit unterschiedlichen Abtastfrequenzen arbeiten, stellt durch den Übergang in den Frequenzbereich kein Problem dar. Untersuchungen zeigten, daß die Synchronisierungsgenauigkeit, d.h. die maximale zeitliche Verschiebung zwischen den Abtastwerten an zwei verschiedenen Meßorten, so daß diese noch als gleichzeitig erfaßt gelten können, die Bestimmungen der Leitungskenngrößen sehr stark beeinflußt. Als Ergebnis kann festgehalten werden, daß die Synchronisierungsgenauigkeit im Bereich von etwa 1 $\mu$s liegen sollte. In der Schutztechnik werden häufig Zeitzeichensender, wie z.B. DCF77 in Mainfflingen zur Echtzeitsynchronisation bei der Störwertprotokollierung häufig verwendet. Die erreichbare Synchronisierungsgenauigkeit im Bereich von etwa 1 ms ist leider nicht ausreichend. Es müssen aufwendigere Verfahren herangezogen werden, wie z.B.

- Kommunikationskanäle (Telefon, Draht- oder Lichtwellenleiter)
- Fernsehsynchronimpulse, wie sie auch zur Blitzortung eingesetzt werden
- Satellitengestützte Navigationssysteme (z.B. GPS, LORAN-C, NNSS, OMEGA)

Aus der Gruppe der Navigationssysteme erreichen Empfangssysteme des GPS (Glonal Positioning System) die große Genauigkeit und werden weitet immer häufiger in den verschiedensten Bereichen eingesetzt. Es handelt sich um ein System von 18 mit Atomuhren ausgestatteten Satelliten, von denen an jedem Punkt der Erde vier zu empfangen sind und eine dreidimensionale Ortsbestimmung ermöglichen. Von den zwei verschiedenen Codes, die ausgesendet werden, ist der hochgenaue P-Code nur für militärische Nutzer verfügbar. Der C/A-Code, der auch für zivile Nutzung zur Verfügung steht und künstlich verschlechtert wird, weil er höhere Genauigkeiten erreicht als vorgesehen war, ermöglicht weltweit eine Ortsbestimmung bis auf etwa 10m und einen Zeitvergleich bis auf etwa $\tau \approx 100$ ns.

Für die Kettenmatrix eines Vierpols (Gleichung (13)) erhält man mit den Nebenbedingungen

$$\det(\underline{A}) = 1 \text{ (passiver Vierpol)} \tag{22}$$

$$\underline{A}_{11} = \underline{A}_{22} \text{ (reziproker Vierpol)}$$

bei bekannten komplexen Zeigern der Spannungen und Ströme an den beiden Meßorten A und B genau drei lineare Gleichungen zur Bestimmung der drei Unbekannten $\underline{A}_{11}$, $\underline{A}_{12}$ und $\underline{A}_{21}$ Auflösen nach den gesuchten Größen liefert.

$$\underline{A}_{11} = \frac{\underline{U}_A \cdot \underline{I}_A + \underline{U}_B \cdot \underline{I}_B}{\underline{U}_A \cdot \underline{I}_B + \underline{U}_B \cdot \underline{I}_A} \qquad (23)$$

$$\underline{A}_{12} = \frac{\underline{U}_A{}^2 - \underline{U}_B{}^2}{\underline{U}_A \cdot \underline{I}_B + \underline{U}_B \cdot \underline{I}_A}$$

$$\underline{A}_{21} = \frac{\underline{I}_A{}^2 - \underline{I}_B{}^2}{\underline{U}_A \cdot \underline{I}_B + \underline{U}_B \cdot \underline{I}_A}$$

Aus den komplexen Spannungen und Strömen werden somit unmittelbar die Elemente der Kettenmatrix und daraus die Leitungsparameter mit Hilfe der Gleichungen (16) und (5.17) berechnet. Ebenso werden unmittelbar die Kenngrößen Kurzschlußeingangsimpedanze und Leerlaufeingangsadmittanz, wie in Gleichung (5.18) definiert, gewonnen:

$$\underline{Z}_k = \frac{\underline{A}_{12}}{\underline{A}_{11}} = \frac{\underline{U}_A{}^2 - \underline{U}_B{}^2}{\underline{U}_A \cdot \underline{I}_A + \underline{U}_B \cdot \underline{I}_B} \qquad (24)$$

$$\underline{Y}_1 = \frac{\underline{A}_{21}}{\underline{A}_{11}} = \frac{\underline{I}_A{}^2 - \underline{I}_B{}^2}{\underline{U}_A \cdot \underline{I}_A + \underline{U}_B \cdot \underline{I}_B}$$

Obwohl prinzipiell die Auswertung eines einzigen Ereignisses ausreichend ist, wird wegen der Meßfehler die Genauigkeit durch Auswerten mehrerer Ereignisse und nachfolgender Mittelwertbildung verbessert. Nicht jedes Ereignis ist zur Bestimmung von Längs- und Querelementen gleichermaßen geeignet, so daß sich die Bildung eines gewichteten Mittelwertes günstig ist.

Darüber hinaus ist nur durch Auswerten mehrerer Ereignisse eine Erkennung von grob falschen Messungen möglich.

Auf eine Synchronissierung der beiden Meßeinrichtungen kann vollständig verzichtet werden, wenn aus den zeitlichen Verläufen der abgetasteten Signale Meßgrößen abgeleitete werden, die unabhängig von einer zusätzlichen zeitlichen Verschiebung an den beiden Meßorten sind. In diesem Fall kann an den beiden Meßorten sogar mit unterschiedlichen Abtastfrequenzen aufgezeichnet werden.

Je nach Art dieser Meßgrößen, die jeweils aus den synchron erfaßten Abtastwerten eines Meßortes gebildet werden, führt die Bestimmung der Leitungskenngrößen zu einem linearen Gleichungssystem, das direkt gelöst werden kann, oder aber zu einem nichtlinearen, iterativ zu lösenden Gleichungssytem. Beide Verfahren werden im folgenden kurz erläutert.

Eine Möglichkeit, das Problem der synchronen Meßwerterfassung zu umgehen, ist die Berechnung der jeweiligen lokalen Impedanzen $\underline{Z}_A$ und $\underline{Z}_B$ aus den Abtastwerten eines Meßortes. Die Impedanzen müssen anschließend in geeigneter Weise miteinander verknüpft werden, um die Leitungsparameter zu erhalten. Aus den Gleichungen (5.12) und (5.13) folgt der Zusammenhang zwischen den lokalen Impedanzen $\underline{Z}_A$ und $\underline{Z}_B$:

$$\underline{Z}_A = \frac{\underline{U}_A}{\underline{I}_A} = \frac{\underline{Z}_B \cdot \cosh(\underline{\gamma}\ell) + \underline{Z}_w \cdot \sinh(\underline{\gamma}\ell)}{\dfrac{\underline{Z}_B}{\underline{Z}_w} \cdot \sinh(\underline{\gamma}\ell) + \cosh(\underline{\gamma}\ell)} \qquad (5.31)$$

Die einfachste Methode zur Bestimmung eines Schätzwertes für $\underline{Z}_k$ bzw. $Y_1$ ist die Bildung der Differenz von $\underline{Z}_A$ und $\underline{Z}_B$ bzw. die Bildung der Differenz der Kehrwerte:

$$\hat{\underline{Z}}_k \approx \underline{Z}_A - \underline{Z}_B \qquad (5.32)$$

$$\hat{\underline{Y}}_l \approx \frac{1}{\underline{Z}_A} - \frac{1}{\underline{Z}_B}$$

Die transformierenden Eigenschaften einer homogenen Leitung werden nicht erfaßt. Man vernachlässigt bei der Bestimmung von $\underline{Z}_k$ praktisch die Querelemente, im wesentlichen die Leitungskapazitäten, und bei der Bestimmung von $Y_l$ die Längselemente.

Diese Näherungen können für Übertragungsleitungen von ca. 100 km Länge und unter der Voraussetzung, daß $m_L$ > 1 bei der Bestimmung von $\underline{Z}_k$ und $m_L$ < 1 bei der Bestimmung von $\underline{Y}_l$ ist. Eine genaue Lösung wird auf folgende Weise erhalten:

Mit Hilfe der Größen Kurzschlußeingansimpedanz $\underline{Z}_k$ und Leerlaufeingangsadmittanz $\underline{Y}_l$ (Gleichung (5.18)) kann Gleichung (5.31) vereinfacht werden:

$$\underline{Z}_A = \frac{\underline{Z}_k + \underline{Z}_B}{1 + \underline{Y}_l \cdot \underline{Z}_B} \tag{34a}$$

Aufgelöst nach $\underline{Z}_k$ erhält man eine Bestimmungsgleichung für die Kurzschlußimpedanz:

$$\underline{Z}_k = \underline{Z}_A - \underline{Z}_B + \underline{Z}_A\, \underline{Z}_B\, \underline{Y}_l \tag{34b}$$

Ein Vergleich mit Gleichung (5.32) zeigt, daß die Querelemente der Leitung durch einen zusätzlichen Korrekturterm berücksichtigt werden. Da die Kapazitätsbeläge, von denen die Leerlaufeingangsadmittanz $\underline{Y}_l$ im wesentlichen abhängt, nur geringfügig variieren, kann man $\underline{Y}_l$ als Standardwert vorgeben. Fehler in $\underline{Y}_l$ wirken sich dann mit zunehmendem Belastungsfaktor $m_L$ immer geringer auf die Genauigkeit von $\underline{Z}_k$ aus.

Die beiden unbekannten Leitungsparameter $\underline{Z}_k$ und $\underline{Y}_l$ werden gleichzeitig bestimmt, wenn mindestens M = 2 unterschiedliche Ereignisse vorliegen. Aus Gleichung (34) erhält man ein komplexes lineares Gleichungssystem, wobei die lokalen Impedanzen des Ereignisses k(k=1,..., M) durch einen hochgestellten Index gekennzeichnet werden:

$$\begin{bmatrix} 1 & -\underline{Z}_A^{(1)} \cdot \underline{Z}_B^{(1)} \\ 1 & -\underline{Z}_A^{(2)} \cdot \underline{Z}_B^{(2)} \\ \vdots & \vdots \\ 1 & -\underline{Z}_A^{(M)} \cdot \underline{Z}_B^{(M)} \end{bmatrix} \cdot \begin{bmatrix} \underline{Z}_k \\ \underline{Y}_l \end{bmatrix} = \begin{bmatrix} \underline{Z}_A^{(1)} - \underline{Z}_B^{(1)} \\ \underline{Z}_A^{(2)} - \underline{Z}_B^{(2)} \\ \vdots \\ \underline{Z}_A^{(M)} - \underline{Z}_B^{(M)} \end{bmatrix} \tag{35a}$$

Dieses Gleichungssystem wird in ein reeles Gleichungsystem mit 2 M Gleichungen für 4 Unbekannte umgeformt :

$$H \cdot x = y \tag{35b}$$

mit

$$H = \begin{bmatrix} 1 & -R_A^{(1)} \cdot R_B^{(1)} \div X_A^{(1)} \cdot X_B^{(1)} & 0 & R_A^{(1)} \cdot X_B^{(1)} \div R_B^{(1)} \cdot X_A^{(1)} \\ 1 & -R_A^{(2)} \cdot R_B^{(2)} \div X_A^{(2)} \cdot X_B^{(2)} & 0 & R_A^{(2)} \cdot X_B^{(2)} \div R_B^{(2)} \cdot X_A^{(2)} \\ \vdots & \vdots & \vdots & \vdots \\ 1 & -R_A^{(M)} \cdot R_B^{(M)} \div X_A^{(M)} \cdot X_B^{(M)} & 0 & R_A^{(M)} \cdot X_B^{(M)} \div R_B^{(M)} \cdot X_A^{(M)} \\ 0 & -(R_A^{(1)} \cdot X_B^{(1)} \div R_B^{(1)} \cdot X_A^{(1)}) & 1 & -R_A^{(1)} \cdot R_B^{(1)} \div X_A^{(1)} \cdot X_B^{(1)} \\ 0 & -(R_A^{(2)} \cdot X_B^{(2)} \div R_B^{(2)} \cdot X_A^{(2)}) & 1 & -R_A^{(2)} \cdot R_B^{(2)} \div X_A^{(2)} \cdot X_B^{(2)} \\ \vdots & \vdots & \vdots & \vdots \\ 0 & -(R_A^{(M)} \cdot X_B^{(M)} \div R_B^{(M)} \cdot X_A^{(M)}) & 1 & -R_A^{(M)} \cdot R_B^{(M)} \div X_A^{(M)} \cdot X_B^{(M)} \end{bmatrix}$$

$$x = \begin{bmatrix} R_k \\ G_l \\ X_k \\ B_l \end{bmatrix} \quad ; \qquad y = \begin{bmatrix} R_A^{(1)} - R_B^{(1)} \\ R_A^{(2)} - R_B^{(2)} \\ \vdots \\ R_A^{(M)} - R_B^{(M)} \\ X_A^{(1)} - X_B^{(1)} \\ X_A^{(2)} - X_B^{(2)} \\ \vdots \\ X_A^{(M)} - X_B^{(M)} \end{bmatrix}$$

und den Definitionen

$$\underline{Z}_A^{(k)} = R_A^{(k)} + j \cdot X_A^{(k)} \tag{36}$$

$$\underline{Z}_B^{(k)} = R_B^{(k)} + j \cdot X_B^{(k)}$$

$$\underline{Z}_k = R_k + j \cdot X_k$$

$$\underline{Y}_l = G_l + j \cdot B_l$$

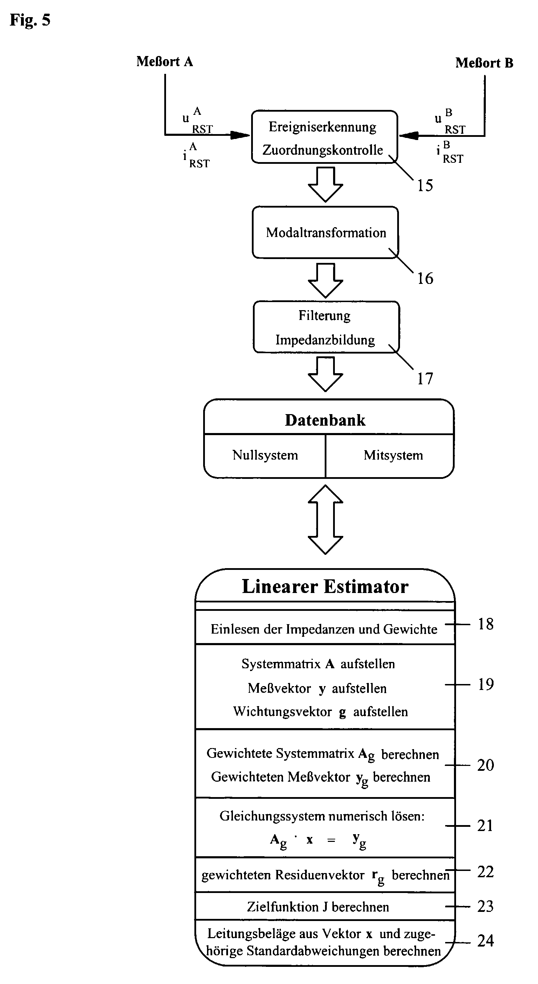

Die Fig. 5 zeigt ein Ablaufdiagramm der oben beschriebenen linearen Estimation. An jedem Meßort 2, 3 werden die Leiterspannungen und Leiterströme durch Abtastung im KHZ-Bereich erfaßt und auf ein unsymmetrisches Ereignis wie Kurzschluß, Erdschluß, Schalthandlung überwacht. In einem Schritt 15 wird ein solches Ereignis erkannt. Die entsprechenden digitalisierten Werte der Ströme und Spannungen werden für jeden Meßort in das jeweilige Modalsystem in Schritten 16 transformiert. Es folgen Schritte 17 in denen die transformierten Werte gefiltert werden. Danach werden die Impedanzen berechnet.

Anschließend wird ein geeigneter Auswertebereich ermittelt, in dem die lokale Impedanz und ihre Standardabweichung berechnet werden. Diese Größen werden für jedes Modalsystem in je einer Datenbank gespeichert, wobei Mit- und Gegensystemgrößen in der gleichen Datenbank verwaltet werden können. Ab einem Ereignis kann der Estimator auf die Datenbank für das Mitsystem und ab zwei Ereignissen für das Nullsystem zugreifen und eine Estimation durchführen, die mit dem Einlesen der Impedanzen und Gewichte im Schritt 18 beginnt und mit der Aufstellung der Systemmatrix $\underline{A}$ des Meßvektors $\underline{y}$ und des Wichtungsvektors $\underline{g}$ in Schritten 19 fortgesetzt wird. Danach werden in Schritten 2a die gewichtete Systemmatrix Ag und der gewichtete Meßvektor yg bezeichnet. Anschließend wird das Gleichungssystem Ag·x = Yg numerisch in Schritten 21 gelöst. In weiteren Schritten 22 wird der gewichtete Residuenvektor rg berechnet. Es schließen sich Schritte 23 zur Berechnung der Zielfunktion J an, worauf in Schritten 24 die Leitungsbeläge aus dem Vektor $\underline{x}$ und die zugehörigen Standardabweichungen bestimmt werden. Danach werden die jeweils für Referenzwerte benötigten Leitungsbeläge in die Distanzschutzeinrichtung 4, 5 eingegeben.

Anstelle der beim oben beschriebenen asynchronen linearen Estimator verwendeten Eingangsgrößen in Form von lokalen Impedanzen können auch andere Größen gebildet werden, die ebenfalls unabhängig von einer synchronisierten Abtastung an beiden Meßorten sind. Besonders geeignet sind Spannungsbetrag sowie die Wirk- und Blindstromkomponenten, die aus den Abtastwerten eines Meßortes gebildet werden. Als redundante Zusatzgröße kann die lokale Admittanz verwendet werden.

Zur Herleitung der funktionalen Zusammenhänge zwischen den Eingangsgrößen und den gesuchten Leistungsparametern erweist sich als günstig, die Kettenmatrix eines Vierpols in die Admittanzform zu überführen. Mit der Orientierung der Spannungen und Ströme nach erhält man:

$$\begin{bmatrix} \underline{I}_A \\ \underline{I}_B \end{bmatrix} = \begin{bmatrix} \underline{Y}_{11} & -\underline{Y}_{12} \\ \underline{Y}_{12} & -\underline{Y}_{11} \end{bmatrix} \cdot \begin{bmatrix} \underline{U}_A \\ \underline{U}_B \end{bmatrix} \tag{37}$$

mit

$$\underline{Y}_{11} = G_{11} + j \cdot B_{11} = \frac{\underline{A}_{11}}{\underline{A}_{12}} \tag{38}$$

$$\underline{Y}_{12} = G_{12} + j \cdot B_{12} = \frac{1}{\underline{A}_{12}}$$

Sind die Admittanzen $\underline{Y}_{11}$ und $\underline{Y}_{12}$ bekannt, so können wiederum die Elemente der Kettenmatrix über die Beziehungen

$$\underline{A}_{11} = \frac{\underline{Y}_{11}}{\underline{Y}_{12}} \tag{39}$$

$$\underline{A}_{12} = \frac{1}{\underline{Y}_{12}}$$

$$\underline{A}_{21} = \frac{A_{11}^2 - 1}{\underline{A}_{12}}$$

und mit den Gleichungen (15) bis (17) die Leitungsparameter bestimmt werden. Alternativ können die Kurzschlußeingangsimpedanz und die Leerlaufadmittanz unmittelbar aus den Admittanzen bestimmt werden:

$$\underline{Z}_k = \frac{1}{\underline{Y}_{11}} \tag{40}$$

$$\underline{Y}_1 = \frac{\underline{Y}_{11}^2 - \underline{Y}_{12}^2}{\underline{Y}_{11}}$$

An jedem Meßort wird neben der Bildung des Spannungsbetrages auch eine Zerlegung des Stroms in eine Wirkkomponente $I_w$ und eine Blindkomponente $I_b$ vorgenommen. Es werden also die Anteile des Stroms bestimmt, die in Phase bzw. orthogonal zur Spannung sind. Die Phasenverschiebung der Spannung sei $\varphi_U$ und der des Stroms $\varphi_I$ gegenüber der angenommenen realen Achse.

Hieraus folgt, wobei ein induktiver Blindstrom, d.h. $\varphi_U > \varphi_I$, ein negatives Vorzeichen erhält:

$$I_w = I\cos(\varphi_I - \varphi_U) \tag{41}$$

$$I_b = I\sin(\varphi_I - \varphi_U)$$

Der komplexe Zeiger des Stroms kann somit geschrieben werden als:

$$\underline{I} = I \cdot e^{j \cdot \varphi_I} = (I_w + j \cdot I_b) \cdot e^{j \cdot \varphi_U} \tag{42}$$

Mit Hilfe der Gleichung (38) wird der Zusammenhang zwischen den Eingangsgrößen und den gesuchten Leitungsparametern angegeben.

$$\underline{I}_A = (I_{Aw} + j \cdot I_{Ab}) \cdot e^{j \cdot \varphi_{UA}} = \underline{Y}_{11} \cdot U_A \cdot e^{j \cdot \varphi_{UA}} - \underline{Y}_{12} \cdot U_B \cdot e^{j \cdot \varphi_{UB}} \tag{43a}$$

$$\underline{I}_B = (I_{Bw} + j \cdot I_{Bb}) \cdot e^{j \cdot \varphi_{UB}} = \underline{Y}_{12} \cdot U_A \cdot e^{j \cdot \varphi_{UA}} - \underline{Y}_{12} \cdot U_B \cdot e^{j \cdot \varphi_{UB}}$$

bzw.

$$I_{Aw} + j \cdot I_{Ab} = \underline{Y}_{11} \cdot U_A - \underline{Y}_{12} \cdot U_B \cdot e^{j \cdot \Delta\varphi} \tag{43b}$$

$$I_{Bw} + j \cdot I_{Bb} = \underline{Y}_{12} \cdot U_A \cdot e^{-j \cdot \Delta\varphi} - \underline{Y}_{11} \cdot \underline{U}_B$$

mit der Definition $\Delta\varphi := U_B - U_A$ und nach Aufspalten in Real- und Imaginärteil erhält man schließlich die Funktionsgleichungen:

$$I_{AW} = G_{11} \cdot U_A - (G_{12} \cdot \cos(\Delta\varphi) - B_{12} \cdot \sin(\Delta\varphi)) \cdot U_B \tag{44}$$

$$I_{Ab} = B_{11} \cdot U_A - (B_{12} \cdot \cos(\Delta\varphi) + G_{12} \cdot \sin(\Delta\varphi)) \cdot U_B$$

$$I_{BW} = (G_{12} \cos(\Delta\varphi) + B_{12} \cdot \sin(\Delta\varphi)) \cdot U_A - G_{11} \cdot U_B$$

$$I_{Bb} = (B_{12} \cdot \cos(\Delta\varphi) - G_{12} \cdot \sin(\Delta\varphi)) \cdot U_A - B_{11} \cdot U_B$$

Die lokalen Admittanzen ergeben sich als

$$G_A = \frac{I_{Aw}}{U_A} \qquad B_A = \frac{I_{Ab}}{U_A} \qquad G_B = \frac{I_{Bw}}{U_B} \qquad B_B = \frac{I_{Bb}}{U_B} \tag{45}$$

Für M verschiedene Ereignisse wird ein nichtlineares Gleichungssystem aufgestellt mit dem Vektor der Eingangsdaten oder Meßvektor y der Dimension 10M sowie dem Unbekannten- oder Zustandsvektor x der Dimension 3M+4:

$$x = \begin{bmatrix} U_A^{(1)} \\ U_B^{(1)} \\ \Delta\varphi^{(1)} \\ \vdots \\ U_A^{(M)} \\ U_B^{(M)} \\ \Delta\varphi^{(M)} \\ G_{11} \\ B_{11} \\ G_{12} \\ B_{12} \end{bmatrix} \quad ; \quad y = \begin{bmatrix} U_A^{(1)} \\ U_B^{(1)} \\ I_{Aw}^{(1)} \\ I_{Ab}^{(1)} \\ I_{Bw}^{(1)} \\ I_{Bb}^{(1)} \\ G_A^{(1)} \\ B_A^{(1)} \\ G_B^{(1)} \\ B_B^{(1)} \\ \vdots \\ U_A^{(M)} \\ U_B^{(M)} \\ I_{Aw}^{(M)} \\ I_{Ab}^{(M)} \\ I_{Bw}^{(M)} \\ I_{Bb}^{(M)} \\ G_A^{(M)} \\ B_A^{(M)} \\ G_B^{(M)} \\ B_B^{(M)} \end{bmatrix} \tag{46}$$

Die Jakobi-Matrix hat die Form

$$H_{k,i}(x) = \frac{\partial h_k(x)}{\partial x_i} \tag{13}$$

Das nichtlineare Gleichungssystem wird iterativ gelöst.

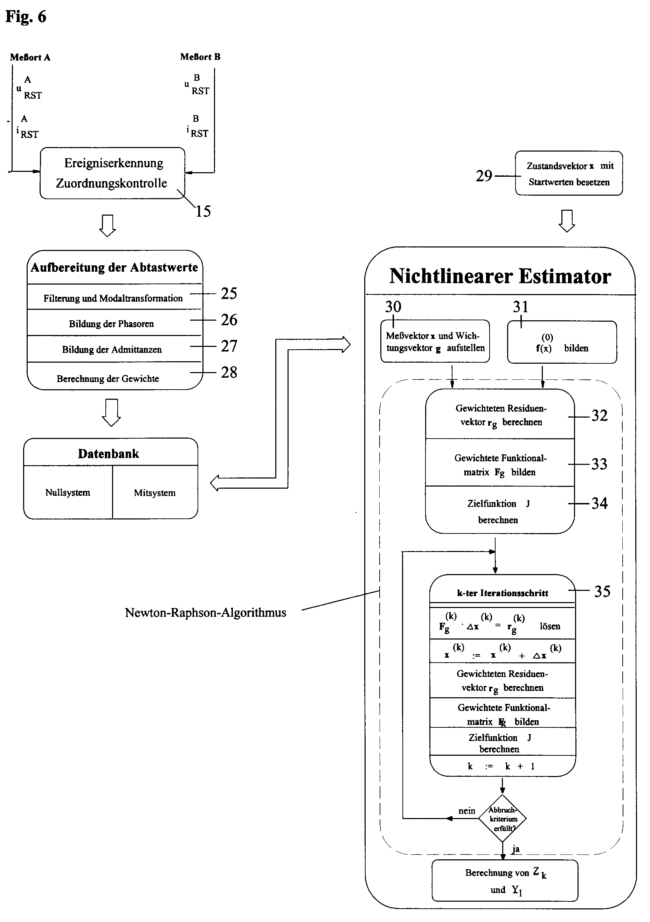

In Fig. 6 ist das Ablaufdiagramm für die oben beschriebene nichtlineare Estimation dargestellt. Die Ereigniskennung ist die gleiche wie bei der linearen Estimation und in Fig. 6 mit 15 bezeichnet. Es folgt die Aufbereitung der Abtastwerte, die Schritte 25 zur Filterung und Modaltransformation und Schritte 25 zur Bildung der komplexen Phasen aufweist. Hieraus werden in Schritten 27 die Spannungsbeträge sowie der Wirkstrom (der Anteil des Stroms in Phase zur Spannung) und Blindstrom (Anteil des Stroms orthogonal zur Spannung) ermittelt.

Zusätzlich werden die lokalen Impedanzen, also die Kehrwerte der lokalen Impedanzen berechnet. Alle diese Größen sind vollkommen unabhängig von einer synchronisierten Meßwerterfassung an beiden Meßorten. Anschließend werden in Schritten 28 die Gewichte berechnet.

Diese Größen werden für jedes Modalsystem in einer Datenbank gespeichert, auf die der nichtlineare Estimator zugreift.

Der Zustandsvektor $\underline{x}$ wird zunächst mit Startwerten in einem Schritt 29 besetzt. Diese Werte werden dem Estimator vorgegeben. Der Estimator bestimmt in Schritten 30 den Meßvektor x und den Wichtungsvektor g.

Weiterhin wird die Größe $f(x)^{(0)}$ im Schritt 31 gebildet. Aus diesen Vektoren wird in Schritten 32 der gewichtete Residuenvektor rg berechnet, worauf in Schritten 33 die gewichtete Funktionalmatrix Fg gebildet wird.

In Schritten 34 wird die Zielfunktion J bestimmt. Es ergibt sich ein nichtlineares, gewichtetes Gleichungssystem, das durch das iterative Newton-Raphson-Verfahren gelöst wird. In Fig. 6 sind die K-ten Iterationsschritte 35 dargestellt.

Die oben erwähnte Methode der gewichteten kleinsten Fehlerquadrate läßt sich dann anwenden, wenn jedem Meßwert ein Gewicht umgekehrt proportional zu seinem mitleren Fehler zugeordnet werden kann. Durch diese Maßnahme wird sichergestellt, daß ungenaue Meßwerte das Ergebnis weniger beeinflussen als genaue Meßwerte. Darüber hinaus sind die Verfahren zur Erkennung von groben Meßfehlern und zur Berechnung von Konfidenzintervallen nur auf gewichtete Geichungssysteme anwendbar. Grundlage der folgenden Betrachtung ist das Fehlfortpflanzungsgesetz von Gauß.

Die mittleren Fehler der Eingangsgrößen können aus den mittleren Fehlern der Abtastwerte von Spannung und Strom berechnet werden, die z.B. als Prozentwert vom Meßbereichsendwert festgelegt werden können. Sie sind für jeden Meßort und für jedes Ereignis getrennt bestimmbar. Interessant ist, daß durch die Verwendung des mittleren Gewichtseinheitsfehlers nicht nur die Schätzgrößen selbst sondern auch ihre mittleren Fehler und damit das Konfidenzintervall unabhängig vom Absolutbetrag der mittleren Fehler der Meßwerte sind. Lediglich das Verhältnis der Genauigkeiten der Meßwerte muß erhalten bleiben. Das bedeutet, daß der mittlere Fehler der Abtastwerte als das erste Glied in der Kette der Fehlerfortpflanzung lediglich bestimmt, wann ein Meßwert als Ausreißer zu behandeln ist. Er hat jedoch keinen Einfluß auf das Estimationsergebnis und das Konfidenzintervall. Somit ist es praktisch unerheblich, ob als mittlerer Fehler der Abtastwert z.B. 1% oder 5% vom Meßbereichsendwert gewählt werden.

Beim linearen Estimator für Einfachleitungen werden als Eingangsgrößen zur Berechnung einer lokalen Impedanz Abtastwerte von Spannungen und Strömen verwendet. Durch bezugskomponenteninvariante Modaltransformation werden die mittleren Fehler der Abtastwerte in jedem Mode jeweils um $\sqrt{3}$ verringert. Die Berechnung von komplexen Zeiger mit Fourier-Analyse oder CSE-Verfahren verringert die mittleren Fehler zusätzlich gemäß Gleichung (4.20). Bezeichnet man die mittleren Fehler der Abtastwerte von Spanung und Strom mit $s_u$ bzw. $s_i$ und die Zahl der verwendeten Abtastwerte mit $M_u$ bzw. $M_i$, so folgt für die mittleren Fehler der komplexen Zeiger:

$$s_U = s_u \cdot \frac{1}{\sqrt{3}} \cdot \sqrt{\frac{2}{M_u}} \qquad (47)$$

$$s_I = s_i \cdot \frac{1}{\sqrt{3}} \cdot \sqrt{\frac{2}{M_i}}$$

Die mittleren Fehler der Schätzgrößen $\underline{Z}K$ und $\underline{Y}I$ erhält man anschließend durch Anwendung des Fehlerfortpflanzungsgesetzes von Gauß auf die Gleichungen (24), wobei die partiellen Abteilungen wegen der Komplexität der Ausdrücke vorteilhaft numerisch berechnet werden können. Für jedes Ereignis erhält man eine Bewertung der Schätzwerte und durch gewichtete Mitteilungen mehrerer Einzelergebnisse ein Konfidenzintervall.

Bei einem asynchronen linearen Estimator für Einfachleitungen werden die mittleren Fehler von Real- und Imaginärteil einer lokalen Impedanz wie folgt bestimmt:

$$s_R = s_X = |\underline{Z}| \cdot \sqrt{\left(\frac{s_U}{U}\right)^2 + \left(\frac{s_I}{I}\right)^2} \qquad (25)$$

Eingangsgrößen sind die Differenzen von Real- bzw. Imaginärteil der lokalen Impedanzen, so daß sich schließlich als Standardabweichungen des Meßvektors die Ausdrücke

$$s_R^{(k)} = \sqrt{(s_{RA}^{(k)})^2 + (s_{RB}^{(k)})^2} \quad \text{für } k = I, ..., M \qquad (48)$$

$$s_X^{(k)} = \sqrt{(s_{XA}^{(k)})^2 + (s_{XB}^{(k)})^2} \quad \text{für } k = M+I, , 2M$$

ergeben. Fehler in den Meßwerten wirken sich praktisch nicht in der Systemmatrix H aus, da diese nur in der zweiten und vierten Spalte auftreten können. Diese Werte werden mit den immer sehr kleinen Werten von GI und BI multipliziert, so daß Fehler im Lösungsvektor hauptsächlich aus Fehlern in der rechten Seite y resultieren.

Bei einem asynchronen nichtlinearen Estimator für Einfachleitungen ist der mittlere Fehler des Spannungsbetrags gleich dem mittleren Fehler des komplexen Zeigers der Spannung, der in Gleichung (47) angegeben ist. Die mittleren Fehler der Wirk- und Blindstromkomponenten erhält man durch Anwendung des Fehlerfortpflanzungsgesetzes von Gauß auf Gleichung (41):

$$s_{fw} = \sqrt{s_I^2 + I_b^2 \cdot \left(\frac{s_U}{U}\right)^2} \qquad (49)$$

$$s_{fb} = \sqrt{s_f^2 + I_w^2 \cdot \left(\frac{s_U}{U}\right)^2}$$

Entsprechend erhält man für die mittleren Fehler der lokalen Admittanzen, analog zu den mittleren Fehler der lokalen Impedanzen:

$$s_G = s_B = |\underline{Y}| \cdot \sqrt{\left(\frac{s_U}{U}\right)^2 + \left(\frac{s_I}{I}\right)^2} \qquad (50)$$

Bei Doppelleitungssystemen wird die Koppelung zwischen den Systemen als zusätzlicher Parameter berücksichtigt. Es müssen die an vier Stellen erkannten Fehler- bzw. Störereignisse verarbeitet werden. Weiterhin wird die Netzkonfiguration berücksichtigt.

Die oben beschriebenen, erfindungsgemäßen Verfahren haben zum Ziel, Kenngrößen von Freileitungen und Kabeln sowohl im Mit- als auch im Nullsystem durch Messungen zu bestimmen. Im Gegensatz zu den üblichen Meßbeschaltungen, die nebem einem relativ hohen zeitlichen Aufwand auch ein Freischalten der Leitung erfordern, ermöglichen diese Verfahren eine Bestimmung der Leitungskenngrößen während des normalen Netzbetriebs. Als Meßgrößen dienen die Störwerte, die von Ereignissen außerhalb des betrachteten Leitungsabschnitts herrühren.

Diese Vorgehensweise bietet mehrere Vorteile: Verschiedene Unsicherheitsfaktoren, die bei einer Berechnung der Kenngrößen nicht ausreichend berücksichtigt werden können, z.B. Erdleitfähigkeit sowie Frequenz- und Stromabhängigkeit im Nullsystem, werden erfaßt. Darüber hinaus sind weder zusätzliche Meßbeschaltungen noch zusätzliche Meßeinrichtungen erforderlich. Und schließlich muß die Leitung für die Dauer der Messung nicht außer Betrieb genommen werden und steht weiterhin für ihre Aufgabe zur Verfügung.

Von besonderem Interesse sind diese Verfahren für starr geerdete Netze, da beim häufigsten Fehler, dem einpoligen Kurzschluß, durch die ungenaue Kenntnis des Nullsystems eine exakte Bestimmung des Fehlerortes und somit eine selektive Abschaltung erschwert werden. Durch den Einsatz dieser Verfahren ist neben einer Erleichterung bei der Parametrierung von Distanzschutzeinrichtungen und Fehlerorten auch eine deutliche Verbesserung der Genauigkeit zu erwarten.

**Patentansprüche**

1. Verfahren zur Bestimmung von Betriebsmittelparametern für wenigstens eine digitale Distanzschutzeinrichtung, **dadurch gekennzeichnet**,
daß an zwei voneinander entfernten Stellen einer Übertragungsleitung während des Betriebs der Leitung die Leiterströme und Leiterspannungen durch Abtastung analoger Meßwerte gemessen, digitalisiert und gespeichert werden, daß mit dem beim Auftreten wenigstens einer unsymmetrischen Störung oder einer entsprechenden Schalthandlung im Netz an einer Stelle außerhalb der Leitung gemessenen Werten der Leiterströme und Leiterspannungen, die durch eine Störwerterkennungseinrichtung bereitgestellt werden, auf der Grundlage entkoppelter Modalsysteme je für einen passiven reziproken Vierpol eine Kettenmatrix nach folgender Beziehung bestimmt wird:

$$\begin{bmatrix} \underline{U}_A \\ \underline{I}_A \end{bmatrix} = \underline{A} \cdot \begin{bmatrix} \underline{U}_B \\ \underline{I}_B \end{bmatrix}$$

worin mit $\underline{A}$ die Kettenmatrix und mit $\underline{U}_A$, $\underline{I}_A$ jeweils die Leiterspannungen und - - ströme an der einen Meßstelle und mit $\underline{U}_B$, $\underline{I}_B$ die Leiterspannungen und - ströme der anderen Meßstelle bezeichnet sind, daß mit der Kettenmatrix $\underline{A}$ ein erster Leitungsparameter nach folgender Gleichung: $\gamma \cdot l = \text{arcosh}\,(\underline{A}_{11})$ und ein zweiter Leitungsparameter:

$$\underline{Z}_w^2 = \frac{\underline{A}_{12}}{\underline{A}_{21}}$$

bestimmt werden, worin mit I die Leitungslänge, mit $\gamma$ die komplexe Ausbreitungskonstante und mit $Z^\omega$ der Wellenwiderstand bezeichnet ist, und daß die Leitungsbeläge aus dem ersten und zweiten Leitungsparameter nach den Gleichungen:

$$(R' + j\omega L') \cdot \ell = \underline{\gamma}\,\ell \cdot \underline{Z}_w$$

und

$$(G' + j\omega C') \cdot \ell = \frac{\underline{\gamma}\,\ell}{\underline{Z}_w}$$

für die Distanzschutzeinrichtung bestimmt werden, wobei mit R' der Widerstandsbelag, mit C' der Induktivitätsbelag, mit G' der Konduktanzbelag mit C' der Kapazitätsbelag und mit $\omega$ die Kreisfrequenz bezeichnet sind, und/oder daß die Kurzschlußeingangsimpedanz

$$\underline{Z}_k = \underline{Z}_w \cdot \tanh(\underline{\gamma}\,\ell)$$

und die Leerlaufeingangsadmittanz

$$\underline{Y}_1 = \frac{1}{\underline{Z}_w} \cdot \tanh(\underline{\gamma}\,\ell)$$

bestimmt werden.

2. Verfahren nach Anspruch 1,
   dadurch gekennzeichnet,
   daß die Meßstellen an den Enden der Übertragungsleitungen vorgesehen sind.

3. Verfahren nach Anspruch 1 oder 2,
   dadurch gekennzeichnet,
   daß die Meßstellen miteinander synchronisiert sind und daß die von einem Fehler hervorgerufenen Leiterströme und -spannungen verarbeitet werden.

4. Verfahren nach Anspruch 1 oder 2,
   dadurch gekennzeichnet,
   daß die Meßstellen nicht synchronisiert sind und daß die von zwei oder mehr Fehlern hervorgerufenen Leiterströme und -spannungen verarbeitet werden.

5. Verfahren nach einem oder mehreren der vorhergehenden Ansprüche,
   dadurch gekennzeichnet,
   daß die Resistanz und/oder Rektanz und/oder Kapazitanz der Übertragungsleitung aus den bei wenigstens zwei Fehlern oder Schalthandlungen gemessenen Leiterspannungen und -strömen nach folgender Gleichung bestimmt werden:
   $\underline{y} = \underline{h}(x)+\underline{v}$, worin $\underline{y}$ der Vektor der Übertragungsleitungsparameter und $\underline{e}(x)$ der Vektor der normalverteilten, unbekannten Meßfehler ist, und daß zur Estimation der Leitungsparameter ein System von überbestimmten Gleichungen nach der Beziehung $\underline{G} \cdot \underline{H} \cdot \underline{X} = \underline{G} \cdot \underline{Y}$ mit der Gewichtsmatrix $G = \mathrm{diag}(1/\delta_1,... \; 1/\delta_M)$ gelöst wird, worin mit $\underline{H}$ die Jakobi-Matrix
   mit $\underline{G}$ die Gewichtsmatrix und mit $1/\delta_1,... \; 1/\delta_M$ die Reziprokwerte der Standardabweichungen der M abgeleiteten Leistungsparameter bestimmt sind, bezeichnet sind.

6. Verfahren nach wenigstens einem der Ansprüche 1-4,
   dadurch gekennzeichnet,
   daß die Abtastung der Leiterströme und -spannungen an den beiden, wenigstens einem unsymmetrischen Ereignis erhaltenen digitalen Meßwerten die Kurzschlußimpedanz nach der Gleichung

$$\underline{Z}_k = \frac{\underline{A}_{12}}{\underline{A}_{11}} = \frac{\underline{U}_A{}^2 - \underline{U}_B{}^2}{\underline{U}_A \cdot \underline{I}_A + \underline{U}_B \cdot \underline{I}_B} \quad \text{und die Leerlaufadmittanz}$$

$$\underline{Y}_1 = \frac{\underline{A}_{21}}{\underline{A}_{11}} = \frac{\underline{I}_A{}^2 - \underline{I}_B{}^2}{\underline{U}_A \cdot \underline{I}_A + \underline{U}_B \cdot \underline{I}_B}$$

bestimmt werden, worin mit $\underline{U}_A$, $\underline{U}_B$ jeweils die Vektoren der Meßwerte der Spannungen an den beiden Meßstellen und mit $\underline{I}_A$, $\underline{I}_B$ jeweils die Vektoren der Meßwerte der Ströme an den beiden Meßstellen bezeichnet sind.

7. Verfahren nach Anspruch 1, 2, 3 oder 6,
dadurch gekennzeichnet,
daß aus den Meßwerten der zeitlichen Verläufe der Ströme und Spannungen der beiden Meßstellen jeweils lokale Impedanzen nach den Gleichungen:

$$\underline{Z}_A = \frac{\underline{U}_A}{\underline{I}_A} \qquad \underline{Z}_B = \frac{\underline{U}_B}{\underline{I}_B}$$

und danach die Kurzschlußimpadanz nach der Gleichung:

$$\underline{Z}_K = \underline{Z}_A - \underline{Z}_B + \underline{Z}_A \cdot \underline{Z}_B \cdot \underline{Y}_I$$

bestimmt werden, worin mit $\underline{Z}_A$, $\underline{Z}_B$ die lokalen Impedanzen und mit $\underline{Y}_I$ die Leerlaufeingangsadmittanz bezeichnet ist, die der Standardwert vorgeben wird.

8. Verfahren nach einem oder mehreren der vorhergehenden Ansprüche,
dadurch gekennzeichnet,
daß aus den bei mehr als einem Fehlerereignis gemessenen Leitströmen und Leitspannungen die Kurzschlußeingangsimpedanz $\underline{Z}_K$ und die Leerlaufeingangsadmittanz $\underline{Y}_e$ zugleich nach folgender Gleichung:

$$\begin{bmatrix} 1 & -\underline{Z}_A^{(1)} \cdot \underline{Z}_B^{(1)} \\ 1 & -\underline{Z}_A^{(2)} \cdot \underline{Z}_B^{(2)} \\ \vdots & \vdots \\ 1 & -\underline{Z}_A^{(M)} \cdot \underline{Z}_B^{(M)} \end{bmatrix} \cdot \begin{bmatrix} \underline{Z}_k \\ \underline{Y}_\ell \end{bmatrix} = \begin{bmatrix} \underline{Z}_A^{(1)} - \underline{Z}_B^{(1)} \\ \underline{Z}_A^{(2)} - \underline{Z}_B^{(2)} \\ \vdots \\ \underline{Z}_A^{(M)} - \underline{Z}_B^{(M)} \end{bmatrix}$$

bestimmt werden, worin mit $\underline{Z}_A$, $\underline{Z}_B$ jeweils die Kurzschlußeingansimpedanzen an den Meßstellen und mit 1...M die Ereignisse bezeichnet sind.

9. Verfahren nach einem oder mehreren der Ansprüche 1 bis 5,
dadurch gekenzeichnet,
daß aus den Meßwerten mehrere Ereignisse die Elemente der Admittanz-Matrix nach den Gleichungen:

$$\underline{Y}_{11} = \frac{\underline{A}_{11}}{\underline{A}_{12}} \qquad \underline{Y}_{12} = \frac{1}{\underline{A}_{12}}$$

bestimmt werden, daß mittels der Admittanz-Matrizen die Komplexen Ströme wie folgt berechnet werden:

$$I_{AW} + j \cdot I_{Ab} = \underline{Y}_{11} \cdot U_A - \underline{Y}_{12} \cdot U_B \cdot e^{j \Delta\varphi}$$

$$I_{BW} + j \cdot I_{Bb} = \underline{Y}_{12} \cdot U_A \cdot e^{-j \Delta \varphi} - \underline{Y}_{11} \cdot U_B$$

woraus die Real- und Imaginärteile gebildet und die lokalen Admittanzen wie folgt berechnet werden:

$$G_A = \frac{I_{Aw}}{U_A} \qquad G_B = \frac{I_{Bw}}{U_B}$$

$$B_A = \frac{I_{Ab}}{U_A} \qquad B_B = \frac{I_{Bb}}{U_B}$$

und daß hieraus die Leitungsparameter nach der Beziehung $\underline{G} \cdot \underline{H} \cdot \underline{X} = \underline{G} \cdot \underline{Y}$ mit

$$
x = \begin{bmatrix} U_A^{(1)} \\ U_B^{(1)} \\ \Delta\varphi^{(1)} \\ \vdots \\ U_A^{(M)} \\ U_B^{(M)} \\ \Delta\varphi^{(M)} \\ G_{11} \\ B_{11} \\ G_{12} \\ B_{12} \end{bmatrix}
\quad ; \quad
y = \begin{bmatrix} U_A^{(1)} \\ U_B^{(1)} \\ I_{Aw}^{(1)} \\ I_{Ab}^{(1)} \\ I_{Bw}^{(1)} \\ I_{Bb}^{(1)} \\ G_A^{(1)} \\ B_A^{(1)} \\ G_B^{(1)} \\ B_B^{(1)} \\ \vdots \\ U_A^{(M)} \\ U_B^{(M)} \\ I_{Aw}^{(M)} \\ I_{Ab}^{(M)} \\ I_{Bw}^{(M)} \\ I_{Bb}^{(M)} \\ G_A^{(M)} \\ B_A^{(M)} \\ G_B^{(M)} \\ B_B^{(M)} \end{bmatrix}
$$

bestimmt werden, worin mit $\underline{Y}_{11}$, $\underline{Y}_{12}$ die Elemente der Admittanz-Matrix, mit $\underline{I}_{AW}$, $\underline{I}_{AB}$ die Wirk- und Blindströme der einen und mit $\underline{I}_{BW}$, $\underline{I}_{Bb}$ die Wirk- und Blindströme der anderen Meßstelle und mit M das jeweilige Ereignis bezeichnet ist.

10. Verfahren nach einem oder mehreren der vorhergehenden Ansprüche,

dadurch gekennzeichnet,
daß bei Doppelleitungssystemen Abtastwerte am Anfang und Ende jeder der Leitungen bestimmt, aufgezeichnet und zur Bestimmung der Betriebsmittelparameter einschließlich der Koppelimpedanz ausgewertet werden.

**Fig. 1**

SYNCHRONISATION

(A)

DIGITALE STÖRWERT-ERFASSUNG — 4

2

5 — DIGITALE STÖRWERT-ERFASSUNG — 3

(B)

KOMMUNIKATION

6

ZENTRALE AUSWERTUNG — 7

| VORSTUFE: | PARAMETER-ESTIMATION: |
|---|---|
| - *FILTERUNG* | - *GEWICHTETE FEHLERQUADRATE* |
| - *BERECHNUNG ABGELEITETER GRÖSSEN* | - *AUSREISSER-BEHANDLUNG* |

DATEN-BANK — 8

(NULL- UND MITSYSTEM)

Fig. 2

EP 0 795 944 A2

10

11

9

$\underline{I}_{RA}$  $\underline{I}_{SA}$  $\underline{I}_{TA}$

$\underline{Z}'_{RR}$  $\underline{Z}'_{SS}$  $\underline{Z}'_{TT}$

$\underline{Y}'_{RT}$  $\underline{Y}'_{RS}$  $\underline{Y}'_{ST}$

$\underline{Y}'_{TE}$  $\underline{Y}'_{SE}$  $\underline{Y}'_{RE}$

$\underline{I}_{RB}$  $\underline{I}_{SB}$  $\underline{I}_{TB}$

$\underline{U}_{RA}$  $\underline{U}_{SA}$  $\underline{U}_{TA}$

$\underline{U}_{RB}$  $\underline{U}_{SB}$  $\underline{U}_{TB}$

Fig. 3

EP 0 795 944 A2

Fig. 4

**Fig. 5**

Meßort A                                    Meßort B

$u^A_{RST}$ →

$i^A_{RST}$

Ereigniserkennung
Zuordnungskontrolle

← $u^B_{RST}$

$i^B_{RST}$

15

Modaltransformation

16

Filterung
Impedanzbildung

17

**Datenbank**

| Nullsystem | Mitsystem |

**Linearer Estimator**

| Einlesen der Impedanzen und Gewichte | 18 |

Systemmatrix **A** aufstellen
Meßvektor **y** aufstellen
Wichtungsvektor **g** aufstellen — 19

Gewichtete Systemmatrix $\mathbf{A_g}$ berechnen
Gewichteten Meßvektor $\mathbf{y_g}$ berechnen — 20

Gleichungssystem numerisch lösen:
$$\mathbf{A_g} \cdot \mathbf{x} = \mathbf{y_g}$$ — 21

gewichteten Residuenvektor $\mathbf{r_g}$ berechnen — 22

Zielfunktion J berechnen — 23

Leitungsbeläge aus Vektor **x** und zugehörige Standardabweichungen berechnen — 24

**Fig. 6**

Meßort A

$u^A_{RST}$

$i^A_{RST}$

Meßort B

$u^B_{RST}$

$i^B_{RST}$

Ereigniserkennung

Zuordnungskontrolle

—15

$29$— Zustandsvektor x mit Startwerten besetzen

**Aufbereitung der Abtastwerte**

| Filterung und Modaltransformation | — 25 |
| Bildung der Phasoren | — 26 |
| Bildung der Admittanzen | — 27 |
| Berechnung der Gewichte | — 28 |

**Datenbank**

| Nullsystem | Mitsystem |

**Nichtlinearer Estimator**

30

Meßvektor x und Wichtungsvektor g aufstellen

31

$f(x)^{(0)}$ bilden

Gewichteten Residuenvektor $r_g$ berechnen —32

Gewichtete Funktionalmatrix $F_g$ bilden —33

Zielfunktion J berechnen —34

Newton-Raphson-Algorithmus

**k-ter Iterationsschritt** —35

$F_g^{(k)} \cdot \Delta x^{(k)} = r_g^{(k)}$ lösen

$x^{(k)} := x^{(k)} + \Delta x^{(k)}$

Gewichteten Residuenvektor $r_g$ berechnen

Gewichtete Funktionalmatrix $F_g$ bilden

Zielfunktion J berechnen

$k := k + 1$

nein / Abbruchkriterium erfüllt?

ja

Berechnung von $Z_k$ und $Y_1$